# EUROPÄISCHE PATENTSCHRIFT

(11) **EP 1 980 676 B1**
(45) Veröffentlichungstag und Bekanntmachung des Hinweises auf die Patenterteilung: **16.11.2011**
(21) Anmeldenummer: 08004907.5
(22) Anmeldetag: 17.03.2008
(51) Int. Cl.: E04B 1/26, E04H 12/22

(54) **Verfahrenzum Herstellen eines Holzbauteils mit Verbindungselement zur Einbindung in Beton oder Erdreich oder zum Anschluss an andere Bauteile**
Fabrication method of a wood component with connecting element for setting the component in concrete or soil or connecting to other components
Méthode de fabrication d'un composant en bois doté d'un élément de liaison destiné à être encastré dans le béton ou la terre ou relié à d'autres composants

(30) Priorität: 29.03.2007 DE 102007015116
(43) Veröffentlichungstag der Anmeldung: 15.10.2008
(73) Patentinhaber: Horn, Rainer, 21614 Buxtehude (DE)
(72) Erfinder: Horn, Rainer, 21614 Buxtehude (DE)

(56) Entgegenhaltungen:
- CH-A- 178 399
- US-A- 4 365 734
- US-A- 6 098 351

## Beschreibung

Die Erfindung betrifft die Herstellung lang gestreckter Holzbauteile mit Verbindungselementen zur Einbindung in Beton oder Erdreich oder zum Anschluss an andere Bauteile als vorgefertigtes Bauteil in industrieller Produktionsweise.

Dokument US4365734 beschreibt ein Verfahren nach dem Oberbegriff der Ansprüche 1, 2 und 3. Die Erfindung wird durch die Ansprüche 1, 2 und 3 definiert.

Bekannt ist die Herstellung von Holzbauteilen mit Verbindungselementen in einer handwerklichen Art der Ausführung. Dabei wird für ein·Bauwerk die Art der Ausführung durch den Planverfasser festgelegt und für tragende Bauteile eine statische Berechnung auf der Grundlage der DIN 1052 " Holzbauwerke " für die Holzbauteile, Verbindungselemente und Anschlüsse erstellt.

Bekannt sind die Holzbauteile in den handelsüblichen Holzarten, Querschnitten und Abmessungen. Weiterhin bekannt sind Verbindungselemente wie z.B. Stützenfüße, Stahlblechformteile oder geschweißte Bauteile.

Ein Katalog der Firma JODA HOLZ IM GARTEN von 2006 zeigt zeigt Einschlaghülsen und Pfostenträger zum Andübeln und Einbetonieren.

### ( Anlage )

Die Verbindungselemente werden durch die Verbindungsmittel wie Nägel, Stabdübel oder Bolzen und Einpressdübel mit dem Holzbauteil verbunden. Besonders biegebeanspruchte Verbindungen müssen aufwendig hergestellt werden, und es gibt eine Vielzahl von Ausführungsarten, bei denen aber immer eine sichtbare Bolzenverbindung ausgeführt werden muss, um eine Einspannung der Holzbauteile in die Verbindungselemente zu erreichen.

Bei den Bolzenverbindungen treten durch Schlupf auch lastunabhängige Verschiebungen auf.

In einem Katalog der Firma BMF aus dem Jahr 2001 werden verschiedene Typen von Stützenfüßen beschrieben ( Anlage ).

Diese und andere handelsübliche Stützenfüße oder Stahlblechformteile sind nicht geeignet, Biegemomente aufzunehmen.

Querdruckbelastungen ( z.B. Anprall ) können bei geschlitzten Verbindungen leicht zum Aufspalten der Holzbauteile führen.

Alle Verbindungen mit den bekannten Verbindungsmitteln wie Stabdübel, Schrauben, Nägel oder Bolzen können nur als sichtbare Verbindung ausgeführt werden.

Bekannt ist die Gebrauchsmusteranmeldung "Stützenfuß für Holzstützen"

### ( Anlage )

Bei diesem Stützenfuß werden die auf Zug beanspruchten Verankerungselemente im Hirnholz des Holzbauteils eingeschraubt oder eingepresst, gemäß DIN 1052 dürfen diese Verbindungsmittel als tragend nicht in Rechnung gestellt werden.

Die Verbindungsmittel werden beim betonieren der Fundamente durch den im Inneren des Hohlprofils aufsteigenden Beton verankert. Wird erdfeuchter oder steifer Beton genutzt, kann der Beton nicht oder nur unzureichend im Hohlprofil aufsteigen und eine sichere Verankerung der Verbindungsmittel kann nicht gewährleistet werden.

Einschlaghülsen aus Metall die zur Verankerung von Holzbauteilen in der Erde dienen, lassen sich kaum so in die Erde schlagen, so dass die Holzbauteile nach der Befestigung gerade stehen.

Die Holzbauteile mit Verbindungselementen werden in der Anzahl sowie in der Art der Ausführung speziell für ein Bauwerk durch die ausführenden Firmen hergestellt, dies bedeutet eine handwerklich geprägte, arbeitsintensive und damit eine teure Art der Ausführung.

Ein Holzbauteil verbunden mit einem Verbindungselement wird serienmäßig nicht hergestellt und ist als ein Bauteil nicht im Handel.

Bauteile für Spielanlagen und Spielgeräte mit den bekannten Verbindungselementen und Verbindungsmitteln erhöhen die Verletzungsgefahr durch hervorstehende Teile wie z.B. Schraubenmuttern.

Pfähle, Pfosten und Stützen oder Masten aus Holz, die direkt ins Erdreich eingespannt werden, haben nur eine Standzeit von fünf bis sechs Jahren.

Aufgabe der Erfindung ist es, ein lang gestrecktes Holzbauteil mit Verbindungs- oder Schutzelement zur Einbindung in Beton oder Erdreich oder zum Anschluss an andere Bauteile als vorgefertigtes Bauteil auf den Markt zu bringen. Die handwerklich geprägte Ausführung der Verbindung von Holzbauteil und Verbindungselement soll durch eine schnellere und kostengünstigere Fertigung ersetzt, und eine Massenproduktion und Lagerhaltung häufig gebrauchter Typen dieses Bauteils ermöglicht werden.

Eine weitere Aufgabe besteht darin, eine typisierte Verbindung von Verbindungselement und Holzbauteil mit hoher Verarbeitungsqualität herzustellen, mit bestimmbaren statischen Eigenschaften, die prüfbar dauerhaft erreicht werden sollen. Die Vielzahl von Ausführungsformen der Verbindungselemente sollen reduziert werden auf eine einheitliche und optisch ansprechende Form ohne sichtbare Verbindungsmittel.

Die Aufgabe wird durch die in der Beschreibung und den Ansprüchen beschriebenen Merkmalen und Erläuterungen sowie den auf den Zeichnungen dargestellten Merkmalen gelöst.

Durch eine bestimmte Auswahl von Holzbauteilen und Verbindungselementen die abgestimmt sind auf statische, konstruktive und optische Anforderungen und Anschlussmöglichkeiten, lassen sich Serien bestimmter häufig gebrauchter Bauteile herstellen, und mit der Anfertigung dieser Bauteile in abgestuften Längen innerhalb einer Serie, der maschinellen Verbindung von Holzbauteil und Verbindungselement, wird eine Massenproduktion und Lagerhaltung dieser Bauteile möglich.

Mit dem erfindungsgemäßen Verfahren kann eine maschinelle Verbindung von Holzbauteil und Verbindungselement wesentlich schneller hergestellt werden als bei einer bekannten Art der Ausführung.

Die Qualität der Verbindung von Holzbauteil und Verbindungselement wird verbessert und kann für alle Verbindungen gleich bleibend gewährleistet werden.

Ein statischer Nachweis für tragende Bauteile kann als Typennachweis geführt werden.

Durch eine Form ohne hervorstehende Teile können die Holzbauteile mit Verbindungselementen gut gestapelt und transportiert werden.

Bei einer Einspannung der Holzbauteile in die Verbindungselemente durch Druck und unter Ausnutzung der zulässigen Faserpressung wird eine hohe Biegesteifigkeit erreicht.

Verbindungselemente gemäß der vorliegenden Erfindung umspannen die Holzbauteile ohne Schwächung durch Bohrlöcher oder Schlitze, schützen die Bauteile und können hohe Querbelastungen, z.B. aus Fahrzeuganprall aufnehmen.

Durch das Aufpressen der Verbindungsmittel auf die Seitenflächen der Holzbauteile und die Verankerung am Verbindungselement entsteht eine zulässige Verbindung gemäß DIN 1052 "Holzbauwerke".

Auch die Gefahr einer unsicheren Verankerung der Verbindungsmittel mit einem erdfeuchten oder steifen Beton im Inneren der Verbindungselemente kann vermieden werden.

Da die Verbindungsmittel nicht sichtbar sind und die Verbindungselemente eine Verlängerung der Holzbauteile mit gleicher Form bilden, entsteht eine Verbindung ohne hervorstehende Teile, die eine Verletzungsgefahr z.B. bei Bauteilen für Spielgeräte, erheblich reduzieren.

Darüber hinaus wird eine optisch ansprechende Form der Verbindung erreicht. Bei besonders gefährdeten Bauteilen die in der Erde verankert werden z.B. Stützen, Masten, Zaunpfähle oder Konstruktionsteile für Spielgeräte werden die Verbindungselemente im Boden verankert und die Holzbauteile bleiben ohne Erdkontakt. Werden die Holzbauteile im Boden eingespannt, bilden die Verbindungselemente einen wirksamen Schutz gegen Fäulnis.

Die Dauer der Standfestigkeit dieser Konstruktionsteile kann somit wesentlich erhöht werden.

Eine lotrechte Ausrichtung der Bauteile ist zudem bei der Einbindung ins Erdreich leicht möglich.

Damit steht den verarbeitenden Betrieben ein Bauteil zur Weiterverarbeitung zur Verfügung, dass billiger und von besserer Qualität ist, als ein Bauteil aus eigener Fertigung.

Anwendungsbeispiele und Beispiele für die Herstellung einer Verbindung von Holzbauteil und Verbindungselement sind auf den Zeichnungen dargestellt und werden nachfolgend erläutert.

### Z 1 - 2

Beispiele für die Anschlussmöglichkeiten eines Holzbauteils mit Verbindungs- oder Schutzelement.

### Z 3 - Z 14

### Verfahren A:

Aufpressen der Verbindungselemente in Längsrichtung des Holzbauteils.

| | |
|---|---|
| Z 3 - Z 5 | Ausführung A 1 |
| Z 6 - Z 7 | Ausführung A 2 |
| Z 8 - Z 9 | Ausführung A 3 |
| Z 10 - | Ausführung A 4 |
| Z 11 - Z 12 | Ausführung A 5 |
| Z 13 - Z 14 | Ausführung A 6 |

### Z15-Z18

### Verfahren B:

Aufpressen der Verbindungselemente rechtwinklig zur Längsrichtung des Holzbauteils.

| | |
|---|---|
| Z 15 - Z 16 | Ausführung B 1 |
| Z 17 | Ausführung B 2 |
| Z 18 | Ausführung B 3 |

### Z 1

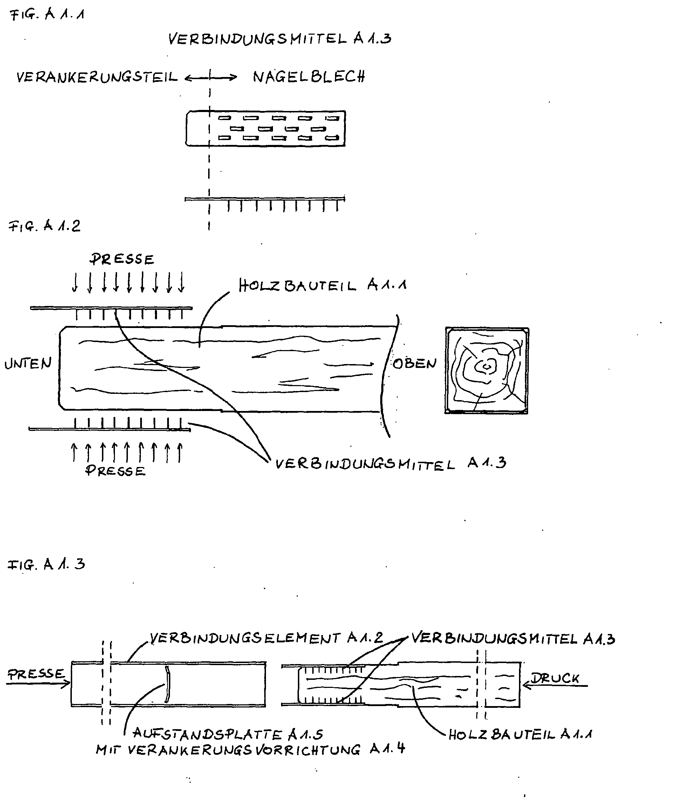

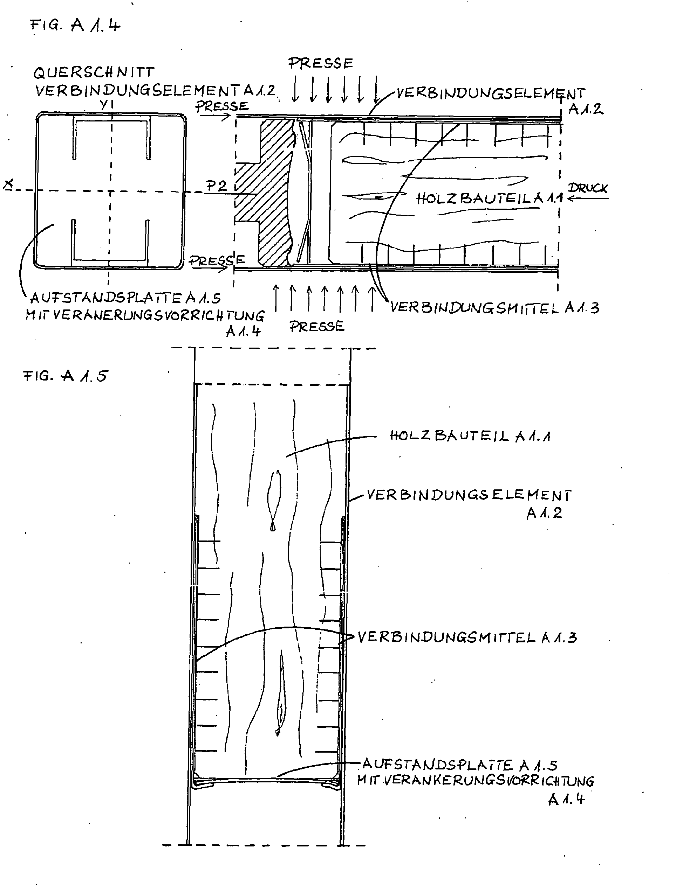

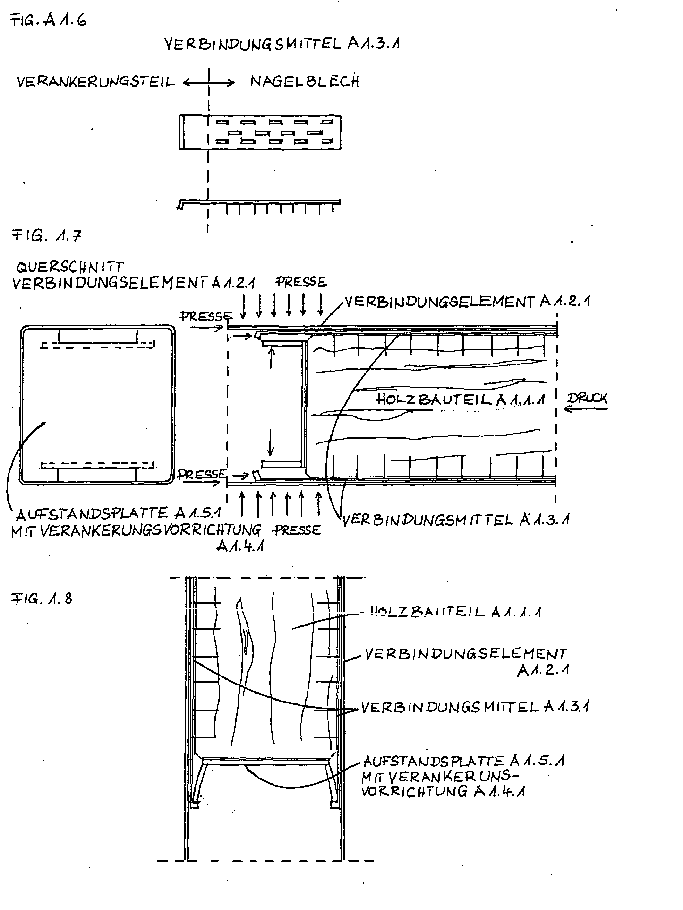

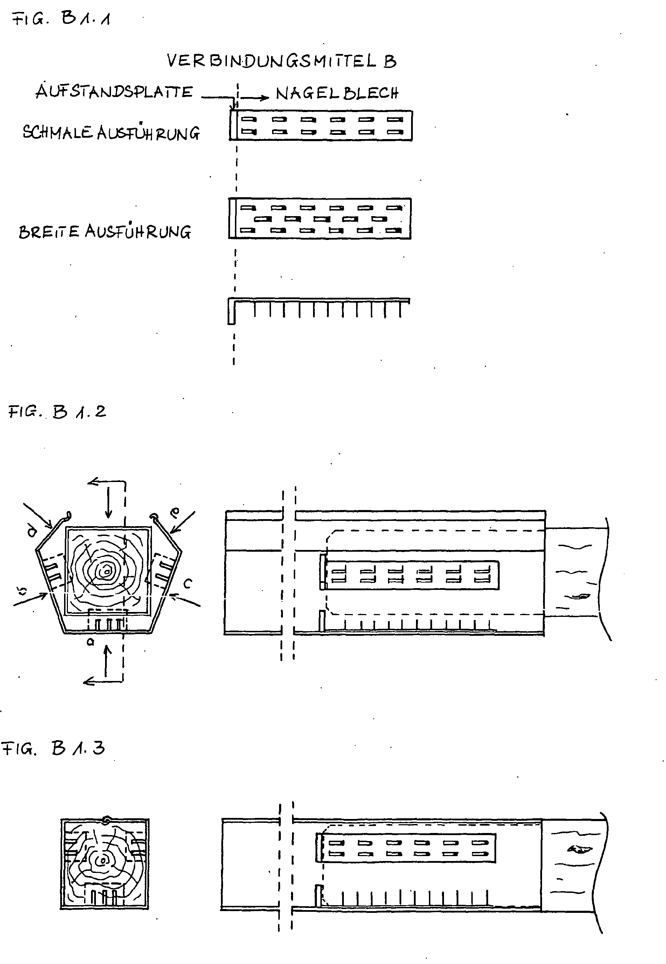

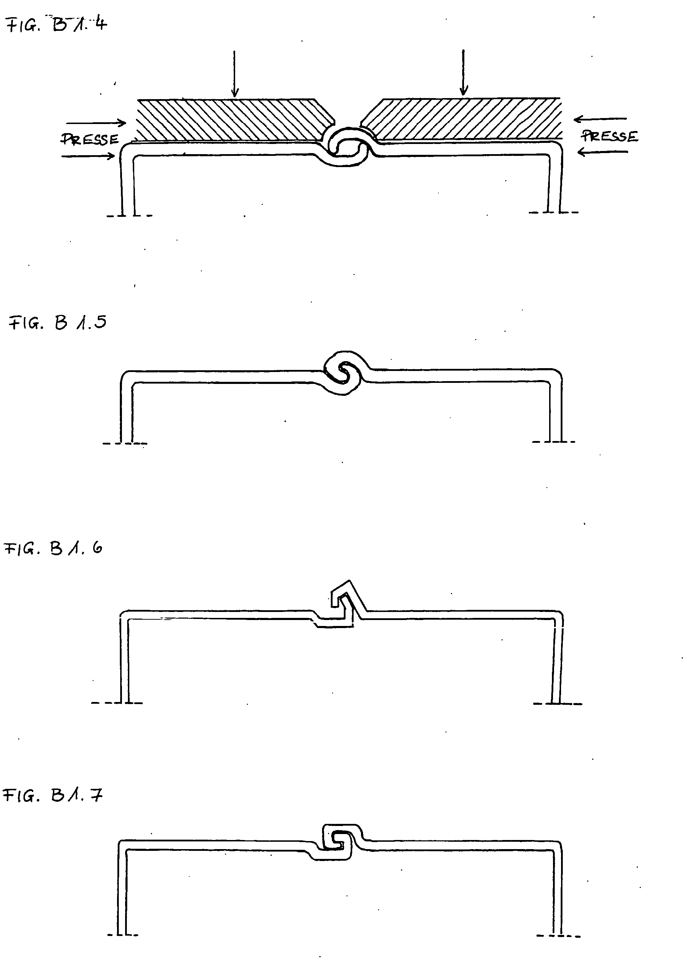

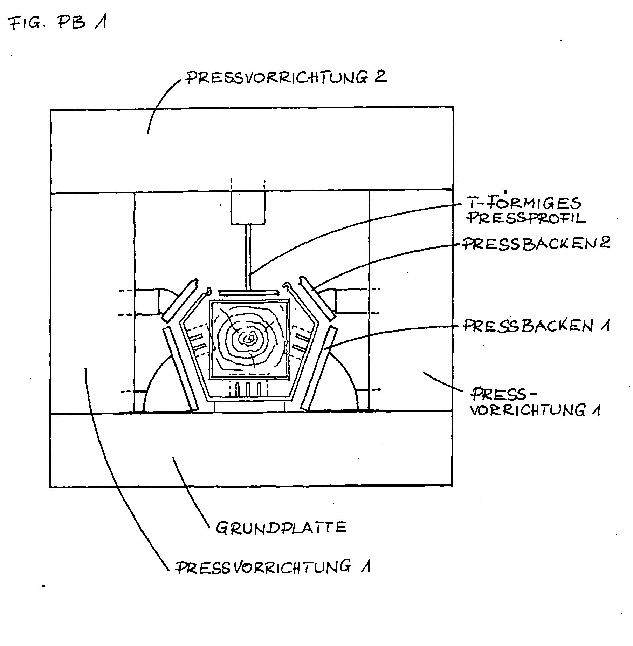

Beispiele für die Anwendungsmöglichkeiten eines Holzbauteils mit Verbindungselement
Fig. 1 stellt ein Holzbauteil dar, dass durch ein Verbindungselement eingespannt wird. Das Verbindungselement ist in ein Betonfundament eingespannt. Die Einspannung des Holzbauteils weist einen Abstand von ca. 5 cm zum fertigen Belag auf, damit Oberflächenwasser nicht in das Holzbauteil eindringt.

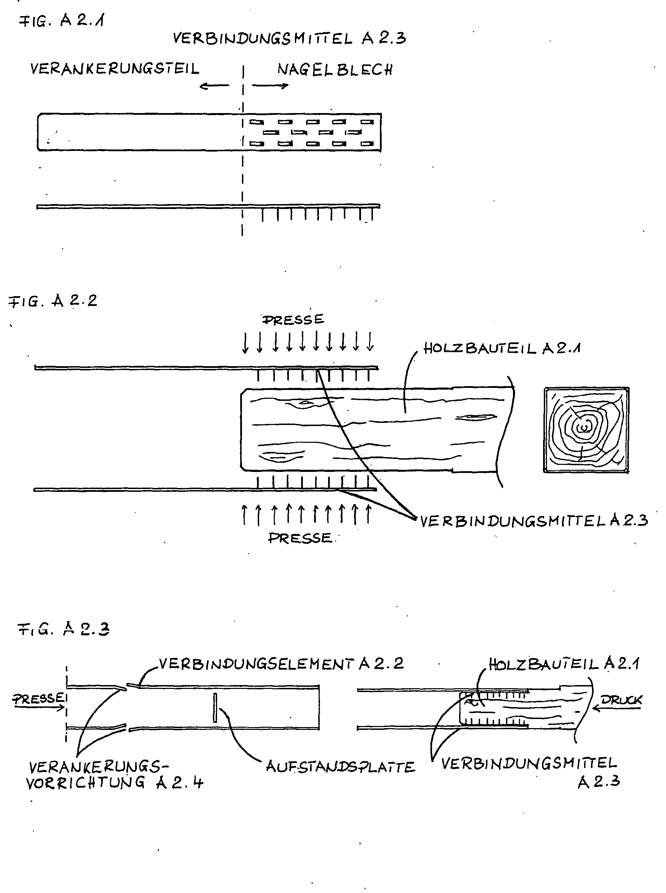

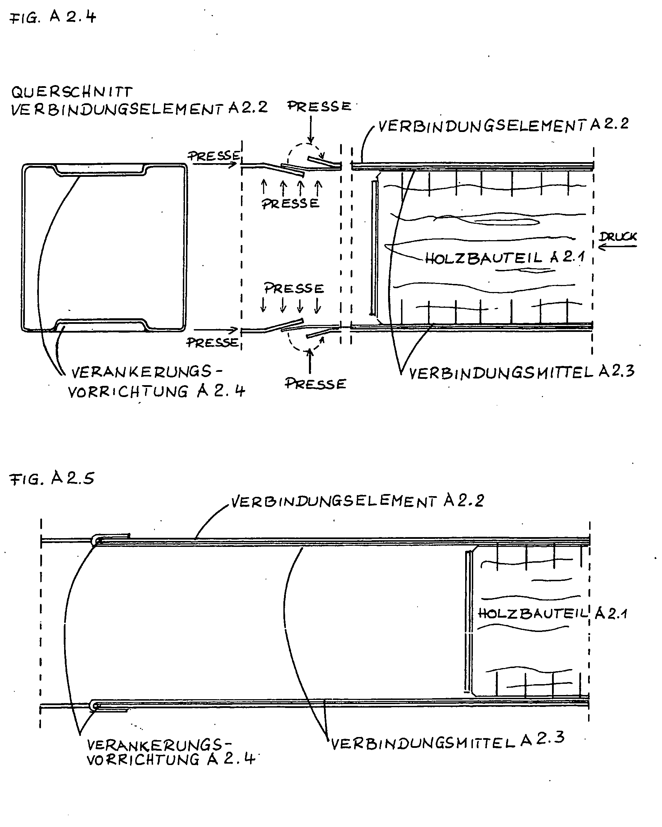

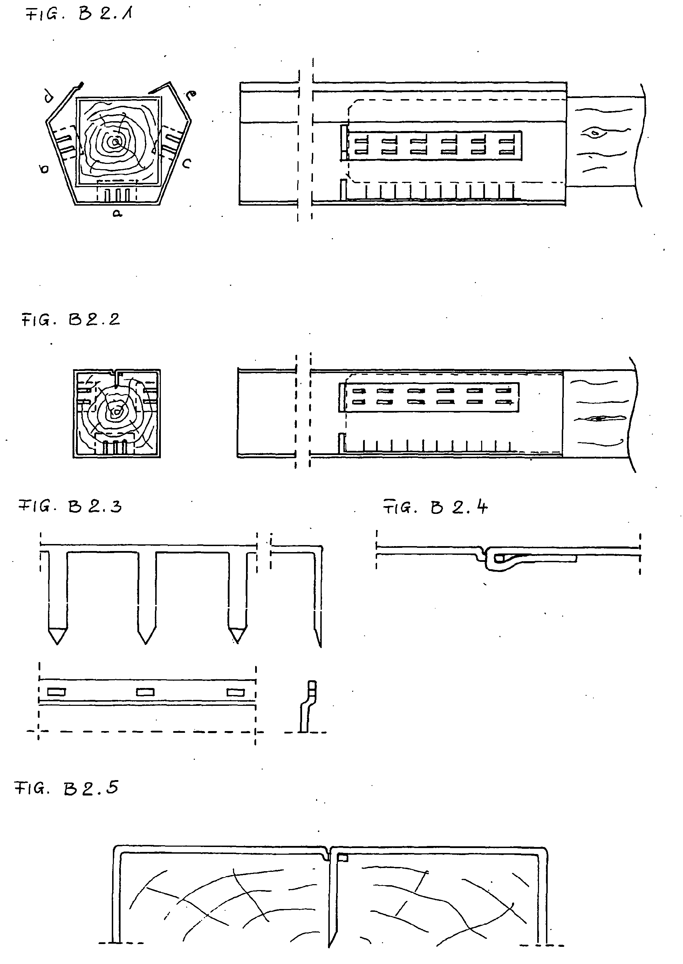

Fig. 2 stellt ebenfalls ein Holzbauteil dar, dass durch ein Verbindungselement eingespannt wird. Das Verbindungselement weist eine Grundplatte auf, die auf dem Beton befestigt wird. Mit einem Abstand von ca. 20cm von der Grundplatte ist eine Aufstandsplatte in das Hohlprofil des Verbindungselementes geschweißt, so dass das Holzbauteil ca. 5 cm über dem fertigen Belag auf der Aufstandsplatte aufsteht.

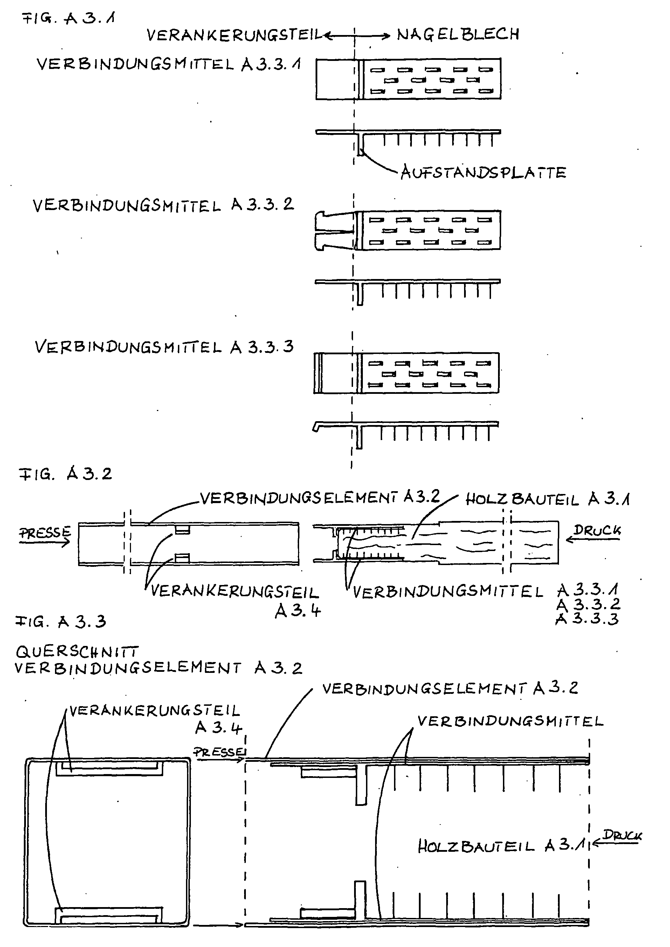

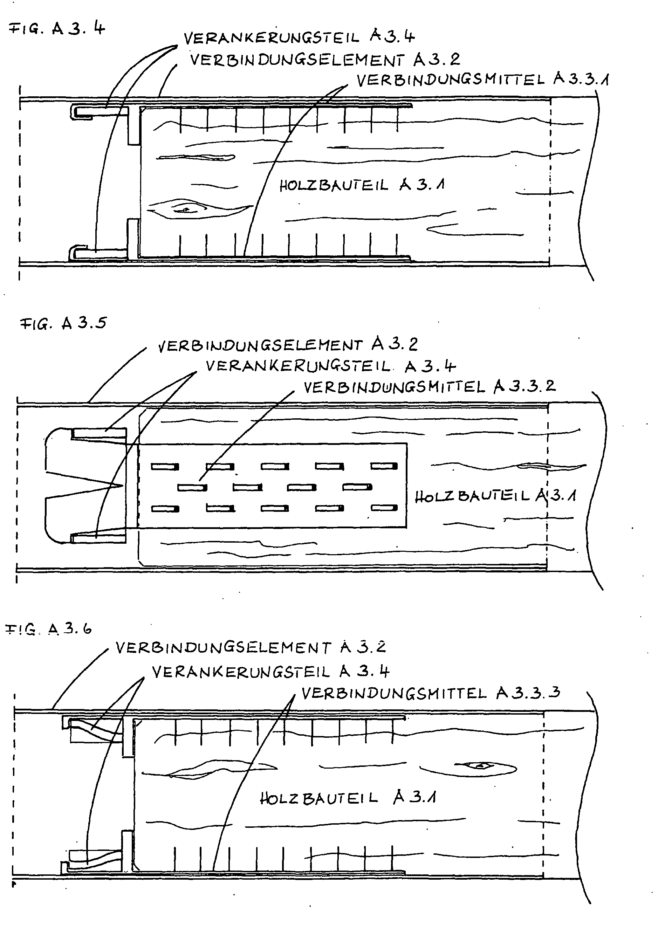

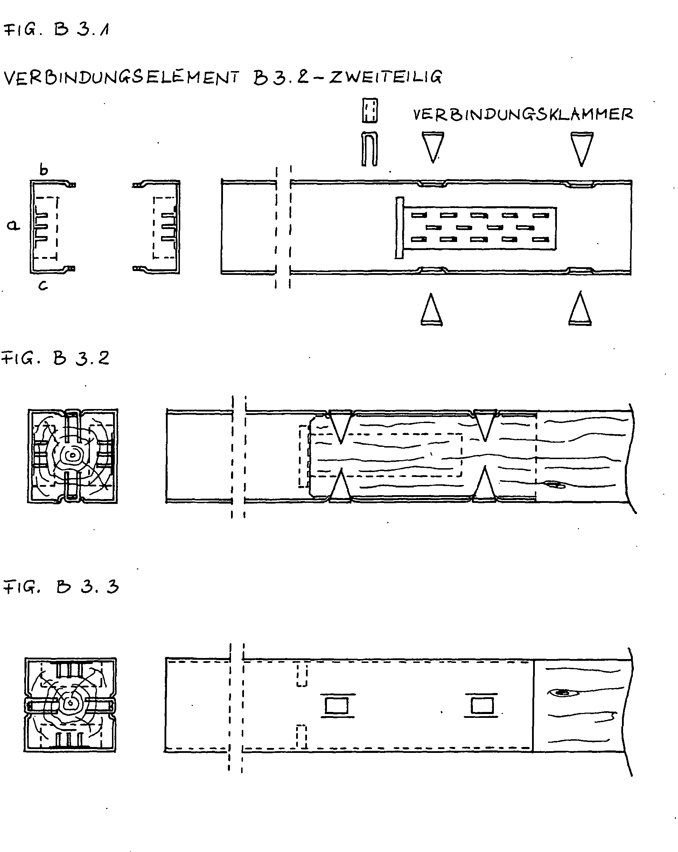

Fig. 3 zeigt auch ein Verbindungselement mit Holzbauteil, dass durch eine Grundplatte mit dem Fundament verbunden ist. Das Holzbauteil steht auf der Grundplatte auf. Diese Anschlussmöglichkeit ist geeignet für erhöhte Fundamente, so dass Wasser nicht in das Holzbauteil eindringen kann.

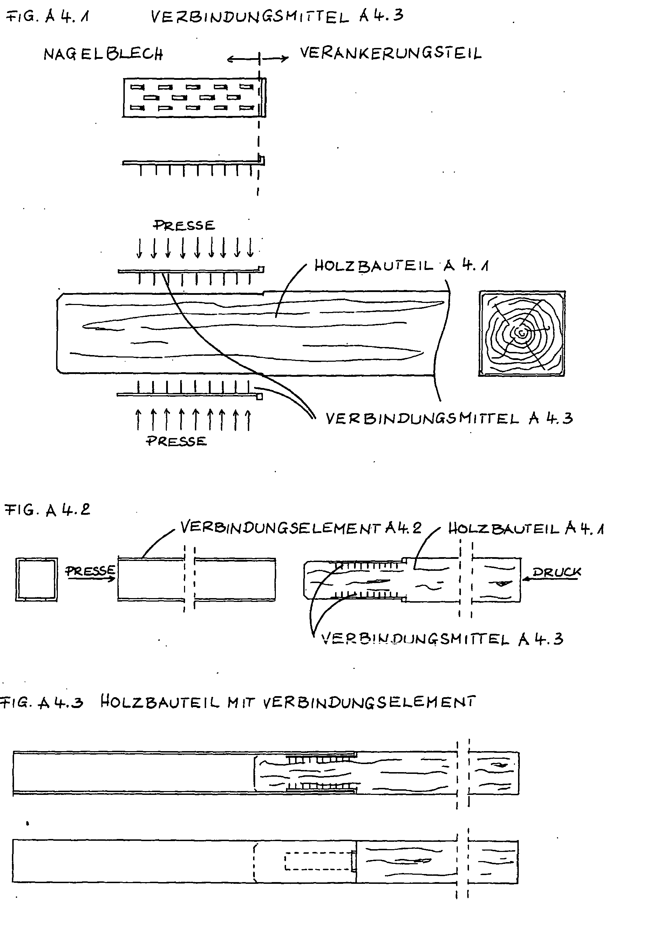

Fig. 4 zeigt ein Holzbauteil mit zweiteiligem Verbindungselement. Diese Art der Ausführung wird bei einem Anschluss auf einem sichtbaren Sockelfundament gewählt und die Befestigung nicht sichtbar sein soll.
Fig. 5 zeigt ein Holzbauteil mit Verbindungselement dass ins Erdreich eingebunden ist. Auch hier ist das Holzbauteil so weit eingespannt, dass ein Abstand von ca. 10 cm zwischen Holzbauteil und Erdreich verbleibt.

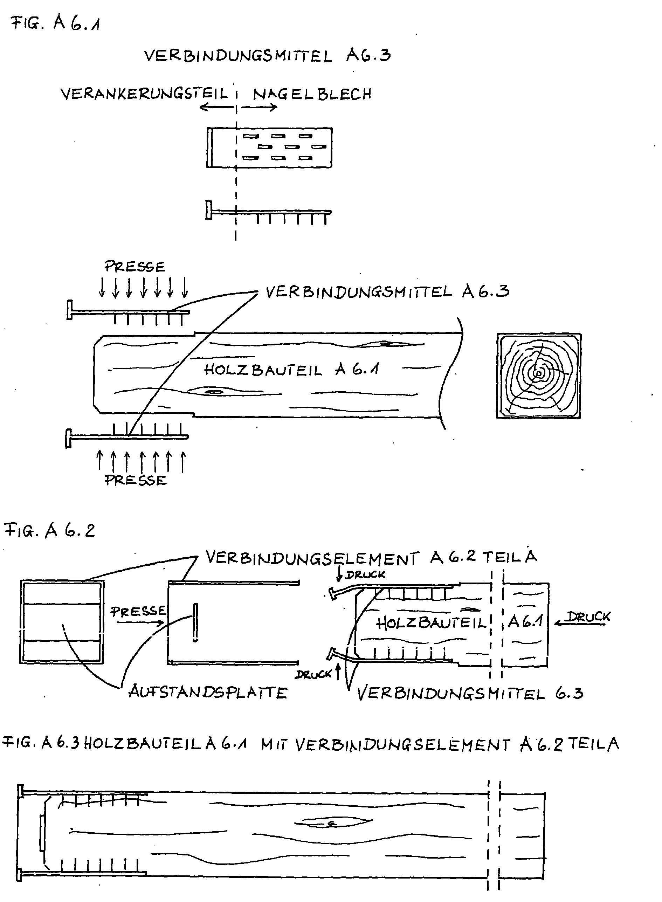

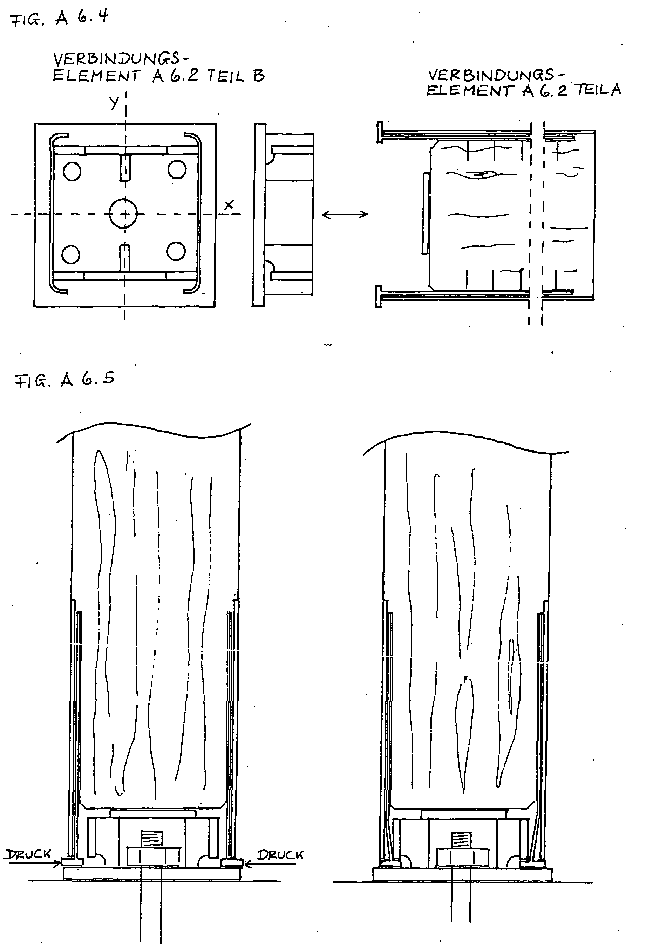

Fig. 6 stellt ein Holzbauteil dar, das in der Erde eingebunden ist. Hier übernimmt das Verbindungselement keine tragende sondern nur eine Schutzfunktion.

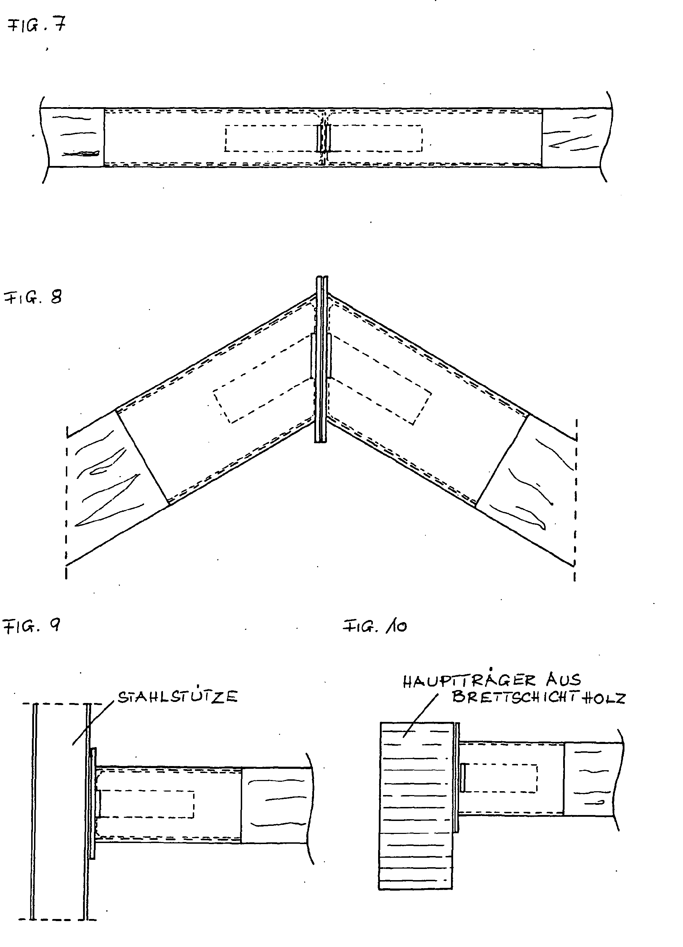

Fig. 7 stellt dar, wie zwei Holzbauteile mit einem Verbindungselement verbunden werde.
Fig. 8 stellt die Verbindung von zwei Bindern im Firstpunkt dar.
Fig. 9 zeigt den Anschluss eines Holzbauteils durch ein Verbindungselement mit Grundplatte an eine Stahlstütze.
Fig. 10 zeigt ein Holzbauteil mit Verbindungselement wie bei Fig. 9 mit einem Anschluss an einen Hauptträger aus Brettschichtholz.

### Z3-Z18

### Verfahren A und B

### Allgemeines

Die auf den Zeichnungen dargestellten Einzelbauteile
1. Holzbauteil
2. Verbindungselement
3. Verbindungsmittel
4. Verankerungsteil oder Verankerungsvorrichtung
5. Aufstandsplatte
6. Pressvorrichtung
sind in Form und Abmessungen beispielhaft dargestellt. In der Praxis wird die Auswahl von Material, die Form und die Art der Ausführung und die Abmessungen für die einzelnen Bauteile von statischen, konstruktiven und optischen Anforderungen bestimmt.

### Holzbauteile:

Für die Holzbauteile gilt allgemein dass sich jede Querschnittsform, Länge, Abmessung oder Holzart für eine Verbindung mit einem Verbindungselement eignet. Häufig gebraucht, und damit zur Massenproduktion gut geeignet, sind z.B. Kanthölzer mit quadratischer, rechteckiger oder runder Querschnittsform in den gebräuchlichen Bauholzarten und Abmessungen. Für die Verwendung als Carportstützen z.B. würde eine Serienanfertigung von erfindungsgemäßen Holzbauteilen mit Verbindungselement mit Kanthölzern aus Brettschichtholz in abgestuften Längen von 1.8m, 2,0m, 2,2m 2,4m, mit einem quadratischem Querschnitt von 12x12cm und 10x10cm in den Holzarten Fichte und Lärche in Frage kommen. Für andere häufig gebrauchte Bauteile im Bauwesen oder für Spielgeräte und Spielanlagen sowie für Zäune und Einfriedungen u.a. können entsprechende Serienanfertigungen erfindungsgemäß hergestellt und lagermäßig vorgehalten werden.

Die Bearbeitung des Holzbauteils richtet sich nach konstruktiven und optischen Anforderungen. Z.B. muss das Holzbauteil im Bereich der Einspannung abgehobelt werden, wenn die Oberflächen von Verbindungselement und Holzbauteil nach dem Aufpressen bündig sein sollen. Bei starken Verbindungsmitteln kann eine Ausfräsung notwendig sein, damit das Verbindungsmittel nach dem Aufpressen nicht über die Oberfläche des Holzbauteils hervorsteht.

### Verbindungselement:

Die Verbindungselemente sind notwendig um die Kräfte die ein Holzbauteil aufzunehmen hat, Querkraft, Biegung, Druck und Zug, in Beton oder Erdreich oder in andere Bauteile weiter zu leiten. Die nachfolgend beschriebenen Verbindungen von Holzbauteilen mit den Verbindungselementen gewährleisten eine sichere Einleitung der Kräfte von den Holzbauteilen in die Verbindungselemente.

Wie bei dem Holzbauteil sind die Abmessungen und die Art der Ausführung des Verbindungselementes sowie die Länge der Einspannung des Holzbauteils in das Verbindungselement bestimmt von statischen, konstruktiven und optischen Anforderungen und von dem Verfahren der Verbindung mit dem Holzbauteil. Das Verbindungselement besteht aus einem Hohlprofil oder wird bei der Herstellung einer Verbindung mit dem Holzbauteil zu einem Hohlprofil verbunden oder geformt. Beim Aufpressen des Verbindungselementes nach Verfahren A und B ist vorgesehen, die Verbindungselemente aus Metall zu fertigen.

Beim Verfahren C sollen Kunststoffe, Zement- und fasergebundene Materialien für die Herstellung der Verbindungselemente und der Herstellung der Verbindung mit dem Holzbauteil verwendet werden. Das Verbindungselement beim Verfahren D hat eine rein konstruktive Aufgabe als Schutzelement.

Vorgesehen ist hier die Verwendung von Folien oder Bahnen als Schutzelement. Die Querschnittsform des Verbindungselementes entspricht der Querschnittsform des Holzbauteils im Bereich der Einspannung. Die inneren Abmessungen des Verbindungselementes werden so gewählt, dass nach dem Aufpressen des Verbindungselementes auf das Holzbauteil eine Einspannung des Holzbauteils unter Berücksichtigung der zulässigen Faserpressung erreicht wird.

Um einen sicheren Korrosionsschutz zu gewährleisten, werden die Verankerungsteile bei Verfahren A und die Verbindungsmittel bei Verfahren B an die Verbindungselemente geschweißt, danach wird das Verbindungselement verzinkt. Die Verbindung von Verbindungsmittel und Verankerungsteil erfolgt in einer Weise die den Korrosionsschutz nicht beschädigt. Mit der Verankerung der Verbindungsmittel an den Verankerungsteilen ist die Verbindung fertig gestellt und bedarf keiner weiteren Bearbeitung.

### Verbindungsmittel:

Die Verbindungsmittel sollen aus korrosionsgeschütztem Metall bestehen.

Die Abmessungen und die Art der Ausführung werden von statischen und konstruktiven Anforderungen bestimmt sowie von der Art der Verbindung von Verbindungselement und Holzbauteil und der Art der Verbindung von Verbindungsmittel und Verankerungsteil. Ein Teil des Verbindungsmittels soll als Nagelblech gemäß DIN 1052 hergestellt und in das Holzbauteil eingepresst werden oder dieser Teil wird durch Schrauben oder Nägel mit dem Holzbauteil verbunden. Der andere Teil soll mit den Verankerungsteilen am Verbindungselement durch Kontakt, Verklemmen, Kanten, Biegen, Kleben oder Nieten kraftschlüssig verbunden werden ( Verfahren A ). Andere Arten der Verbindung z.B. Schweißen ist möglich, dann muss der Schutz gegen Korrosion an diesen Teilen nach dem Aufpressen des Verbindungselementes auf das Holzbauteil gewährleistet werden. Bei Verfahren B ist vorgesehen, die Verbindungsmittel auf die Rohlinge der Verbindungselemente zu schweißen. Diese sollen dann vorgekantet und dann verzinkt werden. Die Rohlinge der Verbindungselemente könnten auch zuerst vorgekantet, dann die Verbindungsmittel aufgeschweißt und danach das Verbindungselement verzinkt werden. Beim Aufpressen des Verbindungselementes nach Verfahren B würde eine kraftschlüssige Verbindung zwischen Verbindungselement, Verbindungsmittel und Holzbauteil entstehen. Bei Verfahren C ist vorgesehen, die Verbindungsmittel in das plastische Material einzubinden, eine Verstärkung des Materials an dieser Stelle vorzusehen und eine Befestigung durch die Erhärtung des Materials zu erreichen.

### Verankerungsteile oder Verankerungsvorrichtung:

Verankerungsteile oder Verankerungsvorrichtungen sind nur für die Herstellung einer Verbindung von Verbindungselement und Holzbauteil nach Verfahren A notwendig. Die Verankerung der Verbindungsmittel wird als nicht sichtbare Verbindung im Inneren des Verbindungselementes hergestellt oder liegt in einem Bereich des Verbindungselementes der in Beton oder Erdreich eingebunden wird.

Bei Verfahren C wird eine Verankerung der Verbindungsmittel durch die innen liegende Einbindung in das Material des Verbindungselementes erreicht. Die Verankerungsteile oder Verankerungsvorrichtungen werden gebildet oder bestehen aus ebenen oder gekanteten Metallplatten, Schlitzen, Kantungen und Ausstanzungen in den Aufstandsplatten oder in den Seitenflächen des Verbindungselementes. Die Verankerungsteile oder Verankerungsvorrichtungen werden an das Verbindungselement geschweißt oder am Verbindungselement hergestellt und mit dem Verbindungselement verzinkt.

### Aufstandsplatte:

Die Aufstandsplatten dienen zur Übertragung von Druckkräften aus den Holzbauteilen in die Verbindungselemente. Sie sind mit einem Abstand vom oberen Ende, im Inneren des Verbindungselementes angeschweißt.

Der Abstand vom oberen Ende entspricht der Länge der Einspannung der Holzbauteile in die Verbindungselemente. An den Aufstandsplatten können auch Verankerungsteile oder Verankerungsvorrichtungen vorgesehen werden, an denen die Verbindungsmittel befestigt werden.

### Pressvorrichtung:

Für Verbindungen von Verbindungselementen und Holzbauteilen nach dem Verfahren A ist vorgesehen eine Pressvorrichtung PA in vier Grundausführungen herzustellen.

Fig. PA 1. zeigt eine Pressvorrichtung für Holzbauteile mit einer Länge bis ca. 5m, ein Verbindungselement bis ca. 1,5m Länge und eine Einspannlänge von bis zu ca. 0,8m. Die Vorrichtung besteht aus einem Grundprofil aus Stahl mit einer Länge von ca. 8,5m. Das Stahlträgerprofil muss ausreichend dimensioniert sein, um entsprechende Kräfte aus dem Pressvorgang aufzunehmen. An einem Ende des Trägers wird eine Pressvorrichtung PV 1 befestigt, an dem anderen Ende ein Widerlager PW 1. Die Befestigung soll so vorgesehen werden, dass das Widerlager PW 1 verschiebbar ist, um auch Verbindungselemente auf kürzere Holzbauteile pressen zu können. In einem Bereich in dem das Holzbauteil auf dem Grundprofil liegt, befinden sich Pressen die das Holzbauteil während des Aufpressens des Verbindungselementes auf das Holzbauteil, am Grundprofil fixieren. Durch einen Presszylinder PV 1, an dem eine Pressplatte PP 1 befestigt ist, welche aus einer Metallplatte und einer Hartgummiplatte besteht, wird das Verbindungselement in Längsrichtung des Holzbauteils, auf das Holzbauteil gepresst. Der Aufpressvorgang wird durch Erzeugung von Vibration, die auf das Verbindungselement übertragen wird und einem, auf dem Holzbauteil aufgetragenen Gleitmittel, unterstützt. Ein weiterer Pressvorgang verbindet die Verbindungsmittel mit den Verankerungsteilen. Für diesen Pressvorgang sind erfindungsgemäß geformte Stahlteile auf dem Presskolben PK 1 befestigt, die die Verbindungsmittel entprechend den Ausführungsbeispielen mit den Verankerungsteilen verbinden.

Fig. PA 2 zeigt die zweite Grundausführung, die geeignet ist, Verbindungselemente mit Holzbauteilen unabhängig von der Länge der Holzbauteile, miteinander zu verbinden. Wie bei Fig. PA 1, ist ein Grundprofil aus einem Stahlträgerprofil vorgesehen. Die Länge beträgt ca. 5m für häufig gebrauchte Verbindungsmittel mit einer Einspannlänge des Holzbauteils bis ca. 1 m. Für längere Verbindungselemente und Einspannlängen könnten auch entsprechend längere Grundprofile gewählt werden. Die Pressvorrichtung PV 1 an einem Ende des Trägers und der Pressvorgang sind vorgesehen wie bei Ausführung 1. Ein Widerlager auf dem anderen Ende des Hauptträgers ist als Pressvorrichtung PV 2 vorgesehen, die das Holzbauteil während des Pressvorgangs einspannt. Diese Pressvorrichtung PV 2 soll verschiebbar sein damit die Einspannung direkt hinter dem Bereich der Einspannung des Holzbauteils in das Verbindungselement erfolgt, unabhängig von der Länge der Einspannung oder der Länge des Verbindungselementes. Diese Pressvorrichtung kann auch als mobile Vorrichtung konstruiert werden um Verbindungen von Verbindungselementen und Holzbauteilen auch auf Baustellen oder anderen Einsatzorten ausführen zu können.

Fig. PA 3. zeigt die dritte Grundausführung, die geeignet ist, Holzbauteile mit Verbindungselementen, unabhängig von der Länge der Holzbauteile, miteinander zu verbinden. Das Grundprofil ist so vorgesehen, wie in Fig. PA 2 beschrieben. Eine Pressvorrichtung PV 3 an einem Ende des Trägers fixiert das Verbindungselement und verankert die Verbindungsmittel an den Verankerungsteilen oder Verankerungsvorrichtungen. In einem Abstand von dieser Pressvorrichtung PV 3, der durch die Länge der Verbindungselemente bestimmt ist, wird eine andere Pressvorrichtung PV 4 angebracht, welche wie in Fig. PA 2 verschiebbar ist. Diese Presseinrichtung PV 4 spannt das Holzbauteil fest ein und presst die Holzbauteile in die Hohlprofile der Verbindungselemente. Dieser Vorgang wird ebenfalls durch Gleitmittel und Vibration unterstützt. Auch diese Ausführung kann als mobile Vorrichtung konstruiert werden.

Fig. PA 4 zeigt eine andere Form der Ausführung, bei welcher an beiden Enden eines Grundprofils Pressvorrichtungen PV 4 zur Einspannung der Holzbauteile und zum Einpressen der Holzbauteile in die Verbindungselemente, wie in Fig. PA 3 beschrieben, angebracht sind. Zwischen diesen Pressvorrichtungen PV 4 befindet sich eine Pressvorrichtung PV 5 zur Fixierung der Verbindungselemente. Mit dieser Form der Ausführung können zwei Holzbauteile von beiden Seiten in das Hohlprofil eines Verbindungselementes eingepresst werden. Auch bei dieser Ausführung wird der Pressvorgang durch Gleitmittel und Vibration unterstützt und die Vorrichtung kann als mobiles Fahrzeug konstruiert werden.

Fig. PA 5 zeigt die vierte Grundausführung, welche so konstruiert ist, dass die Pressvorrichtung Holzbauteile, mit Verbindungselementen, die in verschiedenen Achsrichtungen miteinander verschweißt sind, miteinander verbindet, um damit ein räumliches Tragwerk herzustellen. Bei dieser Ausführung ist vorgesehen, ein Grundprofil von ca. 5m Länge zu verwenden. Die Länge wird bestimmt von der Länge der Verbindungselemente und der Länge der Einspannung der Holzbauteile in die Verbindungselemente. An einem Ende des Grundprofils wird eine Pressvorrichtung PV 6 mit einem verformbaren Widerlager, z.B. als Luftkissen, so konstruiert und befestigt, dass diese Pressvorrichtung PV 6 in der Lage ist, unregelmäßig geformte Verbindungselemente beim Einpressvorgang ohne Verkantungen zu fixieren und leicht auswechselbar sind. In einem Abstand von der Pressvorrichtung PV 6, der bestimmt wird von der Länge der Einspannung des Holzbauteils in das Verbindungselement und der Länge des Verbindungselementes, ist eine Pressvorrichtung PV 4 befestigt, welche die Holzbauteile auf die Verbindungselemente presst. Dieser Vorgang wird durch Vibration des Holzbauteils und durch ein, auf das Holzbauteil aufgetragene Gleitmittel, unterstützt. Ebenso wie die Ausführung 2.und 3., kann diese Ausführung auch für einen mobilen Einsatz konstruiert werden

### Eine Pressvorrichtung für Verfahren B

Eine Pressvorrichtung für Verfahren B geht aus von einer Konstruktion, welche das Verbindungselement umschließt. Die Konstruktion besteht aus einer Grundplatte auf der das Verbindungselement fixiert wird. Das Holzbauteil wird in die vorgekanteten Verbindungselemente eingeführt und von oben durch eine Pressvorrichtung P2 mit einem T- förmigen Pressprofil auf das Verbindungselement mit den Verbindungsmitteln gepresst und der Druck gehalten. Zwei Pressvorrichtungen P1 an den Seiten der Grundplatte pressen die Seitenflächen der Verbindungselemente durch eine kreisförmige Bewegung der Pressbacken 1 zusammen und damit die Verbindungsmittel an den Seitenflächen der Verbindungselemente auf das Holzbauteil. Während der Druck der Pressbacken 1 auf die Seitenflächen anhält, wird das T- förmige Pressprofil der oberen Presseinrichtung P2 in Längsrichtung aus dem Verbindungselement gezogen. Dann werden die oberen Seitenflächen nacheinander durch die Pressbacken 2 auf das Holzbauteil gepresst, so dass die Falze oder Nagelreihen und Ausklinkungen an den Rändern der oberen Seitenflächen ineinander greifen und durch seitlichen Druck der Pressbacken 2 miteinander verbunden werden.

### Verfahren A:

Aufpressen der Verbindungselemente in Längsrichtung des Holzbauteils

### Ausführung A 1:

Fig. A 1.1 zeigt ein Verbindungsmittel A 1.3 mit einem Teil zur Verbindung mit dem Holzbauteil, welches als Nagelblech ausgebildet ist, und einem anderen Teil der zur Verankerung am Verbindungselement A 1.2 dient. Das Material der Verbindungsmittel A 1.3 besteht aus Metall welches im Verankerungsteil biegsam ist, ohne den Korrosionsschutz zu beschädigen.

Fig. A 1.2 zeigt, wie die Verbindungsmittel A 1.3 auf das Holzbauteil A 1.1 mittig auf zwei gegenüber liegenden Seiten auf das Holzbauteil A 1.1 gepresst werden. Die Verbindungsmittel A 1.3 müssen mit ihrer vollen Stärke in das Holz gepresst werden, oder das Holzbauteil A 1.1 wird um die Stärke der Verbindungsmittel A 1.3 ausgefräst. Damit wird verhindert dass diese Teile den Korrosionsschutz des Verbindungselementes A 1.2 beim Aufpressen beschädigen. Die Teile der Verbindungsmittel A 1.3, die zur Verankerung dienen, ragen über das Ende des Holzbauteils A 1.1 hinaus.

Fig. A 1.3 zeigt, wie ein Verbindungselement A 1.2 auf ein Holzbauteil A 1.1 mit eingepressten Verbindungsmitteln A 1.3 in Längsrichtung des Holzbauteils A1.1 aufgepresst werden soll.

Fig. A 1.4 zeigt die Verbindung von Verbindungsmittel A 1.3 und Verbindungselement A 1.2. Eine Aufstandsplatte A 1.5 ist mit einer Vorrichtung zur Verankerung A 1.4 hergestellt. Die Aufstandsplatte A 1.5 ist an zwei gegenüber liegenden Seiten vom Seitenrand zur Mitte verlaufend auf eine Länge von ca. 30mm 2x eingeschlitzt. Die Schlitze sind in einem Abstand von ca. 60mm voneinander angeordnet mit einem gleichen Abstand zur Mittelachse y der Aufstandsplatte A 1.5. Die Aufstandsplatte A 1.5 ist im Bereich zwischen den Schlitzen mit einem kleinen Winkel abgebogen. Dadurch entsteht nach der Befestigung der Aufstandsplatte A1.5 am Verbindungselement A 1.2 ein Abstand zur Wand des Verbindungselementes A 1.2. Beim Aufpressen des Verbindungselementes A1.2 auf das Holzbauteil A 1.1, wird der Verankerungsteil der Verbindungsmittel A 1.3 durch diesen Zwischenraum geschoben. Eine Presse drückt den Presskopf P 2 in Richtung Aufstandsplatte. Durch die Form des Presskopfes P 2 wird der Verankerungsteil des Verbindungsmittels A 1.3 bei diesem Vorgang von der Wand des Verbindungselementes A 1.2 zur Mitte der Aufstandsplatte A 1.5 umgebogen. Gleichzeitig wird der abgebogene Teil der Aufstandsplatte A 1.5 so gedrückt, dass der Verankerungsteil des Verbindungsmittels A 1.3 zwischen der Wand des Verbindungselementes A 1.2 und der Verankerungsvorrichtung A 1.4 der Aufstandsplatte A 1.5 eingeklemmt wird. Bei diesem Vorgang wird das Verbindungselement A 1.2 im Bereich der Aufstandsplatte A 1.5 von außen gepresst um ein Beulen des Verbindungselementes A 1.2 zu verhindern.

Fig. A 1.5 zeigt die fertige Verbindung von Holzbauteil A 1.1 und Verbindungselement A 1.2 mit der Verankerung der Verbindungsmittel A 1.3 an den Verankerungsteilen A 1.4 der Aufstandsplatte A 1.5. Der Verankerungsteil der Verbindungsmittel A 1.3 ist derart eingeklemmt, dass bei Zugbeanspruchung diese Klemmwirkung noch verstärkt wird. Durch die abgebogene Form der Verankerungsteile der Verbindungsmittel A 1.3 und die beschriebene Klemmwirkung werden die Zugkräfte in das Verbindungselement A 1.3 eingeleitet.

Fig. A 1.6 zeigt das Verbindungsmittel A 1.3.1 dass dem Verbindungsmittel A 1.3 entspricht, aber bei dem der Rand am Ende des Verankerungsteils mit einem stumpfen Winkel ca. 4mm abgebogen ist.

Fig. A 1.7 zeigt eine andere Ausführung der Verankerung von Verbindungsmitteln A 1.3.1 mit der Verankerungsvorrichtungen A 1.4.1 an der Aufstandsplatte A 1.5.1. Die Aufstandsplatte A 1.5.1 ist mittig an zwei gegenüber liegenden Seitenrändern parallel zum Seitenrand ca. 60mm lang und rechtwinklig zum Seitenrand ca. 8mm breit ausgeklinkt. An der Unterseite der Aufstandsplatte A 1.5.1 sind als Verankerungsvorrichtungen A 1.4.1 Metallplatten mit den Abmessungen von ca. 60mm x 30mm x 4mm parallel zur langen Seite der Ausklinkungen, direkt am Rand der Ausklinkungen und rechtwinklig zur Aufstandsplatte A 1.5.1, angeschweißt. Die Verankerungsteile der Verbindungsmittel A 1.3.1 werden beim Aufpressen des Verbindungselementes A 1.2.1 auf das Holzbauteil A 1.1.1 durch die Ausklinkung gedrückt. Wenn das Verbindungselement A 1.2.1 vollständig auf das Holzbauteil A 1.1.1 gepresst ist, werden die Verankerungsvorrichtungen A 1.4.1 gegen die Verankerungsteile der Verbindungsmittel A 1.3.1 gepresst. In diesem Bereich wird das Verbindungselement A 1.2.1 von außen durch eine Pressvorrichtung gegen Beulen gesichert. Während dieser Pressvorgang andauert werden mit einer zweiten Presse die Verankerungsteile der Verbindungsmittel A 1.3.1 in Richtung Aufstandsplatte A 1.5.1 gegen die Verankerungsvorrichtungen A 1.4.1 gepresst. Dadurch werden die Verankerungsteile der Verbindungsmittel A 1.3.1 passgenau mit den Verankerungsvorrichtungen A 1.4.1 verbunden. Die abgewinkelten Enden von den Verankerungsteilen der Verbindungsmittel A 1.3.1 werden bei einer Zugbeanspruchung von den abgebogenen Verankerungsvorrichtungen A 1.4.1 an der Aufstandsplatte A 1.5.1 durch Kontakt gehalten.

Fig. A 1.8 zeigt die fertige Verbindung von Holzbauteil A 1.1.1 und Verbindungselement A 1.2.1 mit der Verankerung der Verbindungsmittel A 1.3.1 an den Verankerungsteilen A 1.4.1 der Aufstandsplatte A 1.5.1.

### Ausführung A 2:

Fig. A 2.1 zeigt ein Verbindungsmittel A 2.3 mit einem Teil zur Verbindung mit dem Holzbauteil, welches als Nagelblech ausgebildet ist und einem anderen Teil der zur Verankerung am Verbindungselement A 2.2 dient. Das Material der Verbindungsmittel A 2.3 besteht aus Metall welches im Verankerungsteil biegsam ist, ohne den Korrosionsschutz zu beschädigen.

Fig. A 2.2 zeigt, wie die Verbindungsmittel A 2.3 auf das Holzbauteil A 2.1 gepresst werden. Die Verbindungsmittel A 2.3 werden wie bei Fig. A 1.2 beschrieben, auf das Holzbauteil A 2.1 gepresst.

Fig. A 2.3 zeigt entsprechend Fig. A 1.3 wie ein Verbindungselement A 2.2 auf ein Holzbauteil A 2.1 mit eingepressten Verbindungsmitteln A 2.3 in Längsrichtung des Holzbauteils A 2.1, auf das Holzbauteil A 2.1 aufgepresst werden soll.

Fig. A 2.4 zeigt die Verbindung von Verbindungsmitteln A 2.3 und Verbindungselement A 2.2. Eine Aufstandsplatte A 2.5 im Verbindungselement A 2.2 dient zur Übertragung von Druckkräften aus dem Holzbauteil A 2.1 in das Verbindungselement A 2.2. Die Breite der Aufstandsplatte A 2.5 in Achsrichtung y wird so bestimmt, dass zwischen zwei gegenüber liegenden Seitenrändern der Aufstandsplatte A 2.5 und den Wänden des Verbindungselementes A 2.2 ein Abstand von ca. 8mm besteht. An zwei gegenüber liegenden Seiten des Verbindungselementes A 2.2, zwischen denen der Abstand zur Aufstandsplatte A 2.5 besteht, werden die Verankerungsvorrichtungen A 2.4 in einem Bereich des Verbindungselementes A 2.2 hergestellt, der nach dem Einbau von Beton oder Erdreich umschlossen ist. Die Verankerungsvorrichtungen A 2.4 bestehen aus 70mm langen und 3mm breiten Schlitzen, je ein Schlitz auf einer Seite. Der untere Rand ist leicht ins Innere des Verbindungselementes A 2.2 gebogen, der obere Rand ist nach außen gebogen. Die Wand des Verbindungselementes A 2.2 ist also oberhalb und unterhalb des Schlitzes gegeneinander verschoben so dass dort ein Zwischenraum von ca. 4mm besteht, der als Verankerungsvorrichtung A 2.4 dient.

Beim Aufpressen des Verbindungselementes A 2.2 auf das Holzbauteil A 2.1 werden die Verankerungsteile des Verbindungsmittels A 2.3 zwischen der Wand des Verbindungselementes A 2.2 und der Aufstandsplatte A 2.5 und durch die Verankerungsvorrichtung in der Wand des Verbindungselementes A 2.2, hindurch geschoben. Wenn das Verbindungselement A 2.2 vollständig auf das Holzbauteil A 2.1 gepresst ist, werden die aus der Wand des

Verbindungselementes A 2.2 herausragenden Teile der Verbindungsmittel A 2.3 in Richtung Aufstandsplatte A 2.5 nach oben umgebogen. Durch eine Pressvorrichtung werden die Verankerungsteile der Verbindungsmittel A 2.3 und die Verankerungsvorrichtung des Verbindungselementes A 2.2, zusammengepresst.

Fig. A 2.5 zeigt die fertige Verbindung von Holzbauteil A 2.1 und Verbindungselement A 2.2 mit der Verankerung der Verbindungsmittel A 2.3 an den Verankerungsvorrichtungen A 2.4 des Verbindungselementes A 2.2.

### Ausführung A 3:

Fig. A 3.1 zeigt die Verbindungsmittel A 3.3.1, A 3.3.2 und A 3.3.3. Ein Teil der Verbindungsmittel A 3.3.1, A 3.3.2 und A 3.3.3 ist als Nagelblech ausgebildet, der andere Teil dient zur Verankerung an den Verankerungsvorrichtungen A 3.4. Eine Metallplatte mit den Abmessungen von ca. 55mm x 30mm x 4mm ist im rechten Winkel zwischen dem Teil der als Nagelblech und dem Teil der als Verankerungsteil dient. auf den Verbindungsmitteln A 3.3.1, A 3.3.2 und A 3.3.3 angeschweißt. Diese Metallplatten nehmen Druckkräfte aus dem Holzbauteil A 3.1 auf und leiten die Kräfte in die Verankerungsteile A 3.4 die am Verbindungselement A 3.2 befestigt sind. Die Teile der Verbindungsmittel A 3.3.1, die nicht als Nagelblech ausgebildet sind, dienen als ebenes Blech zur Verankerung mit den Verankerungsteilen A 3.4. In die Teile der Verbindungsmittel A 3.3.2, die nicht als Nagelblech ausgebildet sind und zur Verankerung mit den Verankerungsteilen A 3.4 dienen, sind in der Mitte keilförmige Schlitze eingestanzt. An den Seitenrändern sind diese Teile ausgeklinkt, so dass sie eine Hakenform aufweisen.

Bei den Teilen der Verbindungsmittel A 3.3.3, die nicht als Nagelblech ausgebildet sind und zur Verankerung mit den Verankerungsteilen A 3.4 dienen, werden die unteren Seiten mit einem stumpfen Winkel und einer Länge von ca. 4mm abgebogen. Die Verbindungsmittel werden wie bei Ausführung A 1 und A 2 auf die Holzbauteile A 3.1 gepresst so dass die Abschnittsflächen der Holzbauteile A 3.1 fest an den Aufstandsplatten der Verbindungsmittel A 3.3.1, A 3.3.2 und A 3.3.3 anliegen.

Fig. A 3.2 zeigt wie ein Verbindungselement A 3.2 auf ein Holzbauteil A 3.1 mit eingepressten Verbindungsmitteln A 3.3.1, A 3.3.2 und A 3.3.3 in Längsrichtung des Holzbauteils A 3.1, auf das Holzbauteil A 3.1 aufgepresst werden soll.

Fig. A 3.3 zeigt ein Verbindungselement A 3.2 mit den Verankerungsteilen A 3.4 in einem Querschnitt und einem Längsschnitt.

An der Innenseite von zwei gegenüber liegenden Seiten des Verbindungselementes A 3.2 sind die Verankerungsteile A 3.4, mit einem Abstand vom Ende des Verbindungselementes A 3.2, welcher der Länge der Einspannung des Holzbauteils A 3.1 und der Stärke der Metallplatten an den Verbindungsmitteln A 3.3.1, A 3.3.2 und A 3.3.3 entspricht, an das Verbindungselement A 3.2 angeschweißt. Die Verankerungsteile A 3.4 bestehen aus Metallplatten mit den Abmessungen von ca. 75mm x 40mm x 4mm. deren kürzere Seitenränder im rechten Winkel abgebogen und mit diesen Seiten mittig an das Verbindungselement A 3.2 geschweißt sind. Die Verankerungsteile der Verbindungsmittel A 3.3.1 sind beim Aufpressen des Verbindungselementes A 3.2 auf das Holzbauteil A 3.1 durch die Öffnung zwischen dem Verankerungsteil A 3.4 und der Wand des Verbindungselementes A 3.2 hindurch geschoben worden. Bei dem Aufpressen von Verbindungselementen A 3.2 auf Holzbauteile A 3.1 mit Verbindungsmitteln A 3.3.2 und A 3.3.3 werden die Verankerungsteile der Verbindungsmittel A 3.3.2 und A 3.3.3 ebenso durch die Verankerungsteile A 3.4 geschoben wie bei den Verbindungsmitteln A 3.3.1.

Fig. A 3.4 zeigt das eingepresste Holzbauteil A 3.1 und die Verankerung der Verbindungsmittel A 3.3.1 mit den Verankerungsteilen A 3.4 am Verbindungselement A 3.2. Die Verankerungsteile der Verbindungsmittel A 3.3.1 die nach unten aus dem Verankerungsteil A 3.4 herausragen, werden durch eine Pressvorrichtung um die Verankerungsteile gebogen und damit eine Zugverbindung hergestellt.

Fig. A 3.5 zeigt das eingepresste Holzbauteil A 3.1 und die Verankerung der Verbindungsmittel A 3.3.2 mit den Verankerungsteilen A 3.4 am Verbindungselement A 3.2. Durch eine Pressvorrichtung wird der keilförmige Spalt auseinander gepresst, und die Haken an den Seitenrändern der Verankerungsteile werden unter die abgebogenen Schenkel der Verankerungsteile A 3.4 gedrückt und festgeklemmt.

Fig. A 3.6 zeigt das eingepresste Holzbauteil A 3.1 und die Verankerung der Verbindungsmittel A 3.3.3 mit den Verankerungsteilen A 3.4 am Verbindungselement A 3.2. Die Verankerungsteile der Verbindungsmittel A 3.3.3 ragen mit dem abgebogenen Rand über den unteren Rand der Verankerungsteile A 3.4. Mit einer Pressvorrichtung werden die Seitenflächen der Verankerungsteile A 3.4 gegen die Verankerungsteile der Verbindungsmittel A 3.3.3 und gegen die Wand des Verbindungselementes A 3.2 gedrückt. Eine Pressvorrichtung drückt in diesem Bereich von außen gegen die Wand des Verbindungselementes A 3.2, um ein Beulen zu verhindern. Während dieser Pressvorgang andauert, werden durch einen zweiten Pressvorgang die abgebogenen Enden der Verankerungsteile der Verbindungsmittel A 3.3.3 gegen die Verankerungsteile A 3.4 gedrückt und damit eine zugfeste Verbindung hergestellt.

### Ausführung A 4:

Fig. A 4.1 zeigt ein Verbindungsmittel A 4.3 und wie die Verbindungsmittel A 4.3 auf die Holzbauteile A 4.1 gepresst werden. Ein Teil der Verbindungsmittel A 4.3, ist als Nagelblech ausgebildet und an einem Ende der Verbindungsmittel A 4.3 befinden sich, rechtwinklig zum Verbindungsmittel A 4.3, die Verankerungsteile. Sie sind durch mehrmaliges Kanten am Rand der Verbindungselemente A 4.3 hergestellt, so dass damit ca. 2mm lange und aus doppelter Materialstärke der Verbindungsmittel A 4.3 bestehende Verankerungsteile der Verbindungsmittel A 4.3 vorhanden sind, die sich zur Übertragung von Druckkräften eignen. Die Herstellung dieser Verankerungsteile an den Verbindungsmitteln A 4.3 könnten ebenso in der Form durch das Anschweißen von Metallplatten angefertigt werden. Die Verbindungsmittel A 4.3 könnten auch mit einer Materialverstärkung der Teile, die zur Verankerung dienen, hergestellt werden. Die Verbindungsmittel A 4.3 werden so an zwei gegenüber liegenden Seiten mittig auf das Holzbauteil A 4.1 gepresst, so dass die Verankerungsteile der Verbindungselemente A 4.3 genau am oberen Rand des Bereichs des Holzbauteils A 4.1 liegen, der in das Verbindungselement A 4 eingespannt wird.

Fig. A 4.2 zeigt wie ein Verbindungselement A 4.2 auf ein Holzbauteil A 4.1 mit eingepressten Verbindungsmitteln A 4.3 in Längsrichtung des Holzbauteils A 4.1 aufgepresst werden soll.

Fig. A 4.3 zeigt ein Holzbauteil A 4.1 mit Verbindungselement A 4.2. Das Verbindungselement A 4.2 spannt das Holzbauteil A 4.1 mit einer Länge von ca. 300mm ein, Der obere Rand des Verbindungselementes A 4.2 ist bis gegen die Verankerungsteile der Verbindungsmittel A 4.3 gepresst. Durch Kontakt von den Verankerungsteilen der Verbindungsmittel A 4.3 auf den Rand des Verbindungselementes A 4.2 können Druckkräfte aus dem Holzbauteil A 4.1 auf die Verbindungselemente A 4.2 übertragen werden. Der Bereich vom Rand des Verbindungselementes A 4.2 auf dem die Verankerungsteile der Verbindungsmittel A 4.3 aufliegen, kann auch so ausgeklinkt werden, dass der obere Rand beider Teile bündig ist.

### Ausführung A 5

Bei dieser Art der Ausführung dient das Verbindungselement A 5.2 zum Anschluss von Holzbauteilen A 5.1 an ein fertiges Fundament oder Mauerwerk. Je nach Einspannlänge der Holzbauteile A 5.1 in die Verbindungselemente A 5.2 und Anschluss der Grundplatte an das Fundament kann ein Anschluss für die Übertragung von Biegekräften, Querkräften, Druckkräften und Zugkräften hergestellt werden.

Fig. A 5.1 zeigt ein Verbindungsmittel A 5.3 und wie die Verbindungsmittel A 5.3 auf die Holzbauteile A 5.1 gepresst werden. Ein Teil der Verbindungsmittel A 5.3 ist als Nagelblech ausgebildet, der andere Teil dient zur Verankerung mit den Verankerungsvorrichtungen A 5.4 der Verbindungselemente A 5.2. Die Teile der Verbindungsmittel A 5.3, die zur Verankerung dienen, werden kurz vor dem Teil, der als Nagelblech ausgebildet ist, mit einem stumpfen Winkel abgebogen. Das Holzbauteil A 5.1 ist entsprechend schräg gehobelt. Die Verbindungsmittel werden so auf das Holzbauteil A 5.1 gepresst, dass die Verankerungsteile der Verbindungsmittel A 5.3 bündig sind mit dem unteren Abschnitt des Holzbauteils A 5.1. Durch das Abbiegen des Verankerungsteils der Verbindungsmittel A 5.3 wird verhindert, dass beim Aufpressen des Verbindungselementes A 5.2 auf das Holzbauteil A 5.1, der Korrosionsschutz des Verbindungselementes A 5.2, beschädigt wird.

Fig. A 5.2 zeigt wie ein Verbindungselement A 5.2 auf ein Holzbauteil A 5.1 mit eingepressten Verbindungsmitteln A 5.3 in Längsrichtung des Holzbauteils A 5.1 aufgepresst werden soll.

Fig. A 5.3 zeigt eine Draufsicht des Verbindungselementes A 5.2 und die Befestigung der Verankerungsteile der Verbindungsmittel A 5.3 an den Verankerungsvorrichtungen A 5.4 der Verbindungselemente A 5.2. Das Verbindungselement A 5.2 besteht aus einer Grundplatte auf der rechtwinklig und mittig zur Grundplatte das Hohlprofil angeschweißt ist.

Mittig an zwei gegenüber liegenden Seiten befinden sich an dem Abschnitt des Hohlprofils, der auf der Grundplatte fest geschweißt ist, je eine Ausklinkung. Die Abmessungen der Ausklinkungen sind so gewählt, dass die Verankerungsteile der Verbindungselemente A 5.2 dort eingepresst und festgeklemmt werden können. In der Grundplatte, parallel neben den Ausklinkungen des Hohlprofils befinden sich zwei Aussparrungen von ca. 65mm x 20mm. Ist das Holzbauteil A 5.1 mit den Verbindungsmitteln A 5.3 vollständig bis zur Grundplatte eingepresst, sollen die Verankerungsteile der Verbindungsmittel A 5.3 mit einer Pressvorrichtung durch die Öffnungen der Grundplatte hindurch, in die Ausklinkungen gepresst und damit festgeklemmt werden. Die Grundplatte steht über die Seiten des Hohlprofils, dort sind Bohrlöcher vorgesehen, die zum Anschluss des Verbindungselementes A 5.2 an ein Fundament oder an ein anderes Bauteil dienen sollen.

Fig. A 5.4 zeigt zwei weitere Möglichkeiten der Verankerung von Verbindungsmitteln A 5.3 mit den Verankerungsvorrichtungen A 5.4 der Verbindungselemente A 5.2. Ein Stahlblech kann vor dem Aufpressen des Verbindungselementes A 5.2 auf das Holzbauteil A 5.1 zwischen die Verbindungsmittel A 5.3 gespannt werden. Das Stahlblech ist leicht in Richtung Grundplatte gewölbt. Durch das Aufpressen des Verbindungselementes A 5.2 auf das Holzbauteil A 5.1 wird das gewölbte Stahlblech zwischen Grundplatte und Holzbauteil A 5.1 zusammengedrückt und pressen dadurch die Verankerungsteile der Verbindungsmittel A 5.3 in die Verankerungsvorrichtungen A 5.4 der Verbindungselemente A 5.2.

Die andere Möglichkeit der Verankerung besteht darin, vor dem Aufpressen des Verbindungselementes A 5.2 auf das Holzbauteil A 5.1, Keile zwischen Holzbauteil A 5.1 und Verbindungsmittel A 5.3 zu befestigen die beim Aufpressen des Verbindungselementes A 5.2 auf das Holzbauteil A 5.1 durch die Grundplatte weiter zwischen Holzbauteil A 5.1 und , Verbindungsmittel A 5.3 eingetrieben wird und damit die Verankerungsteile der Verbindungsmittel A 5.3 in die Verankerungsvorrichtung A 5.4 der Verbindungsmittel A 5.2 drückt. Diese beiden Möglichkeiten der Verankerung sind auch anwendbar für Verbindungselemente A 5.2.1, die in der Ausführung A 5.1 erläutert werden.

### Ausführung A 5.1 ( nicht dargestellt )

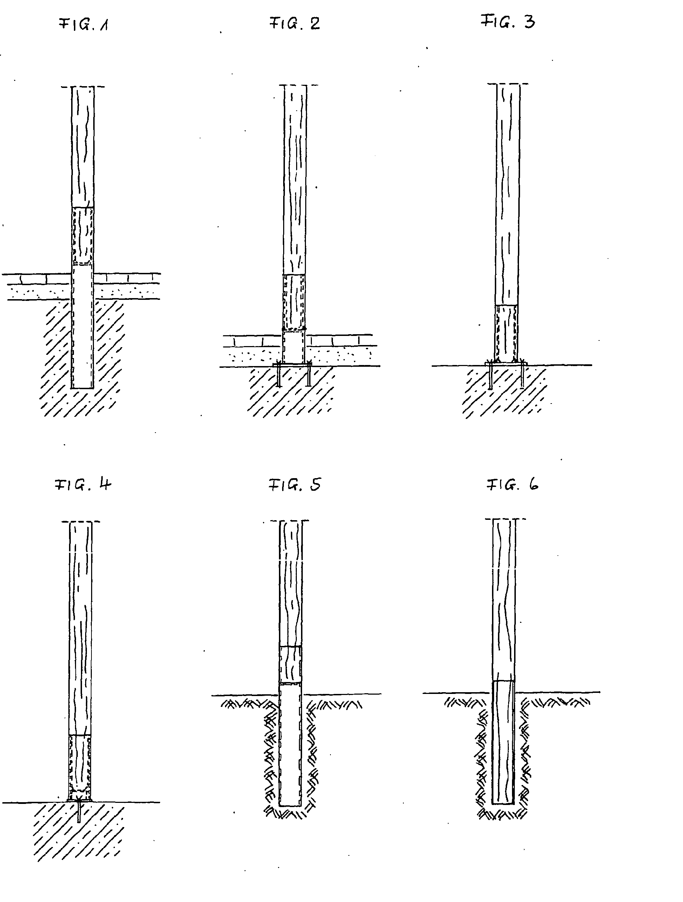

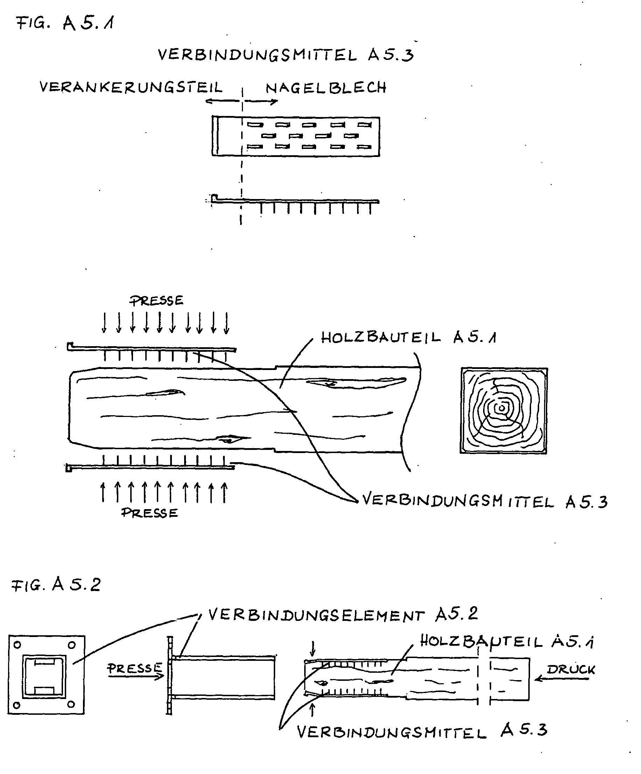

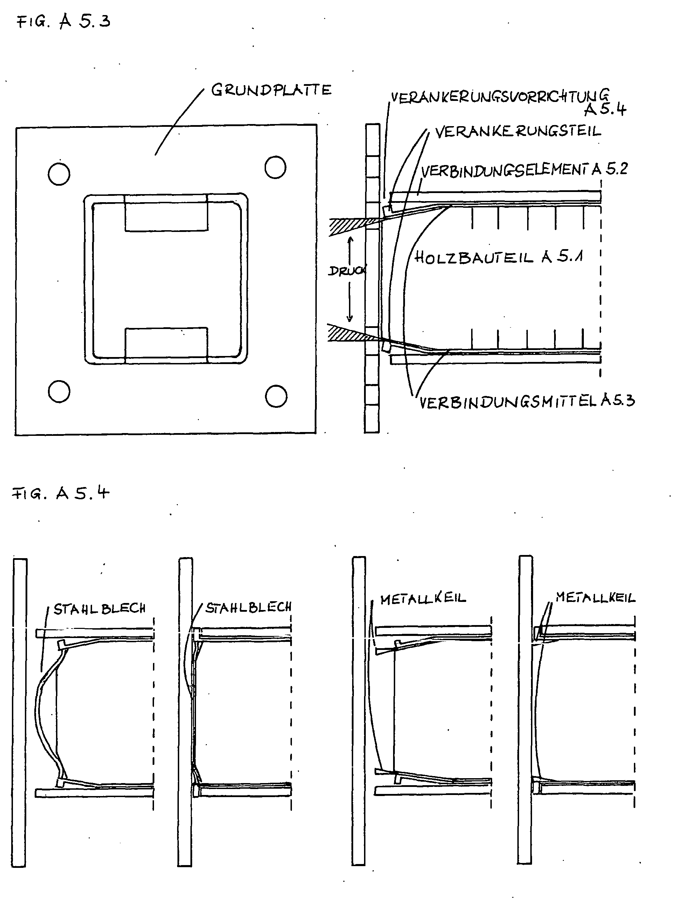

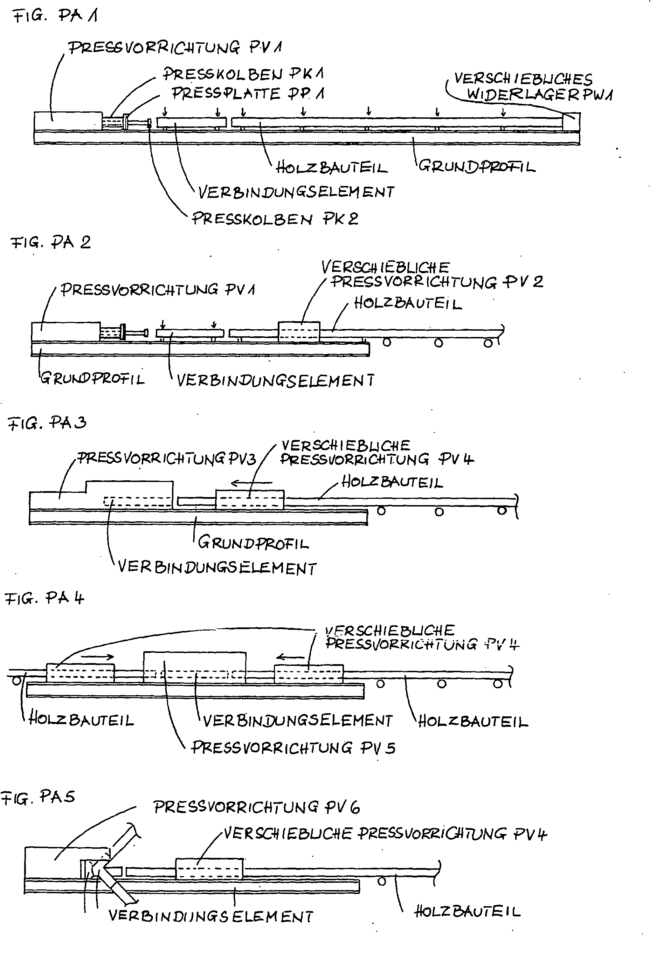

Sollen Holzbauteile A 5.1.1 mit einem Abstand von der Grundplatte eingespannt sein, ist eine Aufstandsplatte A 5.5.1 mit einem Abstand von der Grundplatte in das Hohlprofil geschweißt, welche die Druckkräfte aus den Holzbauteilen A 5.1 in die Verbindungselemente A 5.2.1 einleiten soll. Die Ausklinkungen im Verbindungselement A 5.2.1 die als Verankerungsvorrichtungen A 5.4.1 dienen, sind hier entsprechend Fig. A 5.3 direkt über der Aufstandsplatte A 5.5.1 angeordnet. Die Verbindungsmittel A 5.3.1 sind aus federndem Stahl gefertigt, die Teile, welche zur Verankerung dienen, sind nach dem Aufpressen der Verbindungsmittel A 5.3.1 auf das Holzbauteil A 5.1.1 ca. 1-2cm vom Holzbauteil A 5.1.1 abgespreizt und die unteren Kanten dieser Verankerungsteile sind abgerundet. Das Holzbauteil A 5.1.1 ist entsprechend Fig. 5.1 schräg abgehobelt. Beim Aufpressen des Verbindungselementes A 5.2.1 auf das Holzbauteil A 5.1.1 sollen die Verankerungsteile der Verbindungsmittel A 5.4.1 leicht zusammengedrückt werden damit sie in das Hohlprofil hineinpassen. Die Verankerungsteile der Verbindungsmittel A 5.3.1 drücken beim Einpressvorgang mit Spannung gegen die Innenseiten des Hohlprofils. Ist das Holzbauteil A 5.1.1 vollständig bis auf die Aufstandsplatte aufgepresst, rasten die Verankerungsteile der Verbindungsmittel A 5.3.1 in die Ausklinkungen ein. Eine Pressvorrichtung drückt von außen diese Verankerungsteile leicht nach oben, um eine sichere Zugverbindung zu gewährleisten. '

### Ausführung A 6:

Diese Ausführung eines Holzbauteils mit Verbindungselement ist geeignet für den Anschluss an ein sichtbares Fundament, wenn die Befestigungsmittel wie Bolzen und Muttern nicht zu sehen sein sollen. Das Verbindungselement A 6.2 ist zweiteilig. Teil 1 wird gemäß Ausführung A 6 mit dem Holz bauteil A 6.1 verbunden. Teil 2 wird auf dem Fundament befestigt und beide Teile dann nach Ausführung A 6 verbunden.

Fig. A 6.1 zeigt ein Verbindungsmittel A 6.3 und wie die Verbindungsmittel A 6.3 auf die Holzbauteile A 6.1 gepresst werden. Ein Teil der Verbindungsmittel A 6.3, ist als Nagelblech ausgebildet, der andere Teil dient zur Verankerung mit den Verankerungsvorrichtungen der Verbindungselemente A 6.2 Teil B. Der Rand des Verankerungsteils ist T-förmig ausgebildet. Der Schenkel, der auf den Seiten der Verbindungsmittel A 6.3 liegt, die auf das Holzbauteil A 6.1 gepresst werden ist ca. 2,5mm lang. Der Schenkel auf der anderen Seite ist ca. 6mm lang. Die Stärke der beiden Schenkel beträgt ca. 3mm. Die Verbindungsmittel A 6.3 werden so auf die Holzbauteil A 6.1 gepresst, dass die Verankerungsteile der Verbindungsmittel A 6.3 über den Rand von dem unteren Abschnitt des Holzbauteils A 6.1 hinausragen. Die Teile der Verbindungsmittel A 6.3, die zur Verankerung dienen, werden kurz vor dem Aufpressvorgang der Verbindungselemente A 6.2 Teil 1 auf die Holzbauteile A 6.1, leicht zusammengedrückt. Durch das Zusammendrücken wird erreicht, dass die Verankerungsteile der Verbindungsmittel A 5.3 in das Hohlprofil des Verbindungselementes A 6.2 eingeführt werden können.

Fig. A 6.2 zeigt wie ein Verbindungselement A 6.2, Teil A mit einer Länge von ca. 190mm, auf ein Holzbauteil A 6.1 mit eingepressten Verbindungsmitteln A 6.3, in Längsrichtung des Holzbauteils A 6.1 aufgepresst werden soll. In einem Abstand von ca. 40mm vom unteren Abschnitt des Verbindungselementes A 6.2 Teil A ist eine Aufstandsplatte A 6.5 an zwei gegenüber liegenden Seiten im Hohlprofil angeschweißt. Die Breite der Aufstandsplatte A 6.5 ist so bemessen, dass ein Abstand von den anderen Seitenwänden des Verbindungselementes A 6.2 Teil A zum Rand der Aufstandsplatte A 6.5 besteht. Durch diesen Zwischenraum werden die Verankerungsteile der Verbindungsmittel A 6.3, beim Aufpressen des Verbindungselementes A 6.2 auf das Holzbauteil A 6.1, hindurch geschoben. An den unteren Rändern dieser Seitenwände sind Ausklinkungen in der Größe vorhanden, so dass dort der längere Schenkel von den Verankerungsteilen der Verbindungsmittel A 6.3 genau hineinpasst. Wenn das Verbindungselement A 6.2 vollständig auf das Holzbauteil A 6.1 gepresst ist, rasten die längeren Schenkel von den Verankerungsteilen der Verbindungsmittel A 6.3 in den Ausklinkungen ein und stehen ca. 3mm nach außen über die Seitenwand des Verbindungselementes A 6.2 Teil A.

Fig. A 6.3 zeigt ein Verbindungselement A 6.2 Teil 1, dass vollständig auf das Holzbauteil A 6.1 aufgepresst ist. Die längeren Schenkel von den Verankerungsteilen der Verbindungsmittel A 6.3 sind in den Ausklinkungen eingerastet.

Fig. A 6.4 zeigt eine Draufsicht des Verbindungselementes A 6.2 Teil B. Das Verbindungselement A 6.2 besteht aus einer Grundplatte mit der gleichen Querschnittsform wie das Hohlprofil des Verbindungselementes A 6.2 Teil A. Die Grundplatte ist an jeder Seite ca. 3mm größer als das Hohlprofil des Verbindungselementes A 6.2 Teil A. Auf der Grundplatte sind an zwei gegenüber liegenden Seiten, parallel zur Achse y, Führungsbleche rechtwinklig zur Grundplatte angeschweißt. Sie sind mit ihren Seiten in gleichem Abstand von allen Rändern der Grundplatte angeschweißt und mit einem Abstand von einander, so dass die Außenmaße der Führungsbleche genau den Innenmaßen des Verbindungselementes A 6.2 Teil A entsprechen. Zwischen den Führungsblechen sind parallel zur Achse x, an zwei gegenüber liegenden Seiten der Grundplatte die Verankerungsteile A 6.4, mit einem Abstand von ca. 4mm von den Außenkanten der Führungsbleche angeschweißt. An den unteren Rändern der Verankerungsteile A 6.4 befinden sich mittig Ausklinkungen mit den Abmessungen die den inneren Schenkeln der Verankerungsteile von den Verbindungsmitteln A 6.3 entsprechen. An die Verankerungsteile A 6.4 und an die Grundplatte sind mittig und rechtwinklig Aufstandsbleche geschweißt. Sie reichen von den Verankerungsteilen A 6.4 so weit in die Mitte der Grundplatte, so dass die Aufstandsplatte A 6.5, mit den Seitenrändern ca. 3mm auf den Aufstandsblechen aufliegen, wenn beide Teile der Verbindungselemente A 6.2, miteinander verbunden sind. Verbindungsbleche, Verankerungsteile und Aufstandsbleche sind gleich hoch. Das Maß von der Grundplatte zum oberen Rand der Teile entspricht dem Maß vom unteren Abschnitt des Verbindungselementes bis zur Unterkante der Aufstandsplatte A 6.4. In der Grundplatte sind Bohrungen vorgesehen, die zur Befestigung von Teil 2 des Verbindungselementes A 6.2 auf einem Fundament dienen.

Fig. A 6.5 zeigt, wie das Verbindungselemente A 6.2 Teil A mit den Holzbauteilen A 6.1 auf die Verbindungselemente A 6.2 Teil B, aufgesteckt und damit verbunden wird. Durch Schläge auf die äußeren Schenkel der Verankerungsteile von den Verbindungsmitteln A 6.3, die aus den Ausklinkungen des Hohlprofils der Verbindungselemente A 6.2 herausragen, werden die inneren Schenkel der Verankerungsteile von den Verbindungsmitteln A 6.3 in die Ausklinkungen der Verankerungsteile A 6.4 hineingetrieben und dort festgeklemmt.

### Verfahren B:

Aufpressen des Verbindungselementes auf das Holzbauteil, rechtwinklig zur Längsachse des Holzbauteils

Bei Verfahren B ist es möglich, die Verbindungsmittel vor dem Aufpressen des Verbindungselementes auf das Holzbauteil, an dem Verbindungselement zu befestigen. Die Verbindungselemente werden aus vorgekanteten Blechen hergestellt und mit den Verbindungsmitteln, rechtwinklig zur Längsachse des Holzbauteils, auf das Holzbauteil gepresst. Das ebene Blech wird so gekantet, dass es durch einfache Pressvorgänge auf das Holzbauteil aufgepresst und damit die gleiche Querschnittsform, die das Holzbauteil aufweist, leicht gebildet werden kann. Die Verbindungsmittel oder Aufstandsbleche können vor oder nach dem Vorkanten der Bleche angeschweißt werden. An den Seitenrändern der Verbindungselemente, die bei aufgepresstem Verbindungsmittel auf das Holzbauteil einen Stoß bilden, werden die Verankerungsvorrichtungen hergestellt. Nach dem Aufpressen des Verbindungselementes auf das Holzbauteil werden die Verankerungsteile so miteinander verbunden, dass eine Einspannung des Holzbauteils in das Verbindungselement unter Berücksichtigung der zulässigen Faserpressung erfolgt, und das Verbindungselement die Wirkung eines geschlossenen Hohlprofils erzielt.

### Ausführung B 1:

Fig. B1.1 zeigt die Verbindungsmittel B 1.3 mit Aufstandsplatten. Die Aufstandsplatten werden an ihrer Unterseite mit dem Verbindungselement verschweißt, und leiten dadurch Druckkräfte und Zugkräfte von den Verbindungsmitteln B 1.3 in das Verbindungselement B 1.2.

Fig. B1.2 zeigt einen Querschnitt und einen Längschnitt des Verbindungselementes B 1.2 mit den Verbindungsmitteln B 1.3. Das Verbindungselement B 1.2 ist nicht vollständig zu einem Hohlprofil vorgekantet, damit das Holzbauteil B 1.2 in das Verbindungselement B 1.2 mit den Verbindungsmitteln B 1.3 eingeführt werden kann, bevor das Verbindungselement B 1.2 mit dem Holzbauteil B 1.1 verpresst wird. Die Verbindungsmittel B 1.3 sind mit einem Abstand vom Ende des Verbindungselementes B 1.2 an drei Innenseiten des Verbindungselementes B 1.2 angeschweißt. Der Abstand von den Aufstandsplatten der Verbindungsmittel B 1.3 zum oberen Ende des Verbindungselementes B 1.2 entspricht der Länge der Einspannung des Holzbauteils B 1.1 in das Verbindungselement B 1.2. Die Verbindungsmittel B 1.3 an den Seiten b und c des Verbindungselementes B 1.2 sind oberhalb der Mitte dieser Seiten befestigt, damit das Holzbauteil B 1.1 nicht durch die Verbindungsmittel B 1.3 behindert wird, wenn es vor dem Aufpressvorgang, in das Verbindungselement B 1.2 eingeführt wird. Die Seitenränder der Seiten d und e sind durch gekantete Falze als Verankerungsvorrichtung B 1.4 ausgebildet. Nach dem Aufpressen des Verbindungselementes B 1.2 auf das Holzbauteil B 1.1, werden die Falze zusammengepresst. Beim Aufpressvorgang wird zunächst das Holzbauteil B 1.1 in das Verbindungselement B 1.2 eingeführt. Durch einen Presskopf P , wird das Holzbauteil auf die Seite a mit den Verbindungsmitteln B 1.3 aufgepresst, dann die Seitenflächen b und c, danach zuerst die Seitenfläche d und dann die Seitenfläche e. Die Falze der Verankerungsvorrichtung B 1.4 greifen beim Aufpressen der Seite e ineinander und werden durch seitlichen Pressdruck miteinander verbunden. Während die Falze miteinander verpresst werden, halten die anderen Pressen ihren Druck, damit eine Einspannung des Holzbauteils B 1.1 durch das Verbindungselement B 1.2 erfolgt.

Fig. B1.3 zeigt einen Querschnitt und einen Längsschnitt von einem durch die Falze der Verankerungsvorrichtung B 1.4 verbundenem Verbindungselement B 1.2. Die Verbindungsmittel B 1.3 sind in das Holzbauteil B 1.1 eingepresst und das Holzbauteil B 1.1 ist von den Aufstandsplatten der Verbindungsmittel B 1.3 bis zum oberen Ende des Verbindungselementes B 1.2, eingespannt.

Fig. B1.4 zeigt, wie die Falze der Verankerungsvorrichtung B 1.4 durch eine Pressvorrichtung zusammengepresst werden. Durch die gerundete Form der Falze sowie die gerundete Form der Pressköpfe werden die Enden der Falze durch seitlichen Druck so verformt so dass sie ineinander greifen und die Seiten des Verbindungselementes B 1.2 zugfest miteinander verbinden. Fig. B1.5 zeigt eine gekantete Form der Falze als Verankerungsvorrichtung B 1.4. Die Falze werden ebenfalls durch seitlichen Druck und Druck von oben so verformt, dass sie die Seiten des Verbindungselementes B 1.2 zugfest miteinander verbinden.

### Ausführung B 2:

Fig. B2.1 zeigt ein vorgekantetes Verbindungselement B 2.2. Das Verbindungselement B 2.2 ist bis auf die Verankerungsvorrichtung B 2.4 genau so ausgeführt wie das Verbindungselement B 1.2. Auch die Verbindungsmittel B 2.3 werden genau so ausgeführt und an dem Verbindungselement B 2.2 befestigt, wie bei der Ausführung B1. Der Rand der Seite d des Verbindungselementes B 2.2 ist abgekantet und in diesem Falz sind Löcher eingestanzt. Der Rand der Seite e ist abgebogen und ausgestanzt, so das er wie eine Nagelreihe ausgebildet ist. Das Aufpressen des Verbindungselementes B 2.2 erfolgt bis auf die Verbindung der Verankerungsteile, in derselben Weise wie bei Ausführung B 1. Die Verankerungsteile B 2.4 werden verbunden, indem die Nagelreihe der Seite e, beim Aufpressen der Seite d auf das Holzbauteil B 2.1 durch die Löcher der Seite d, in das Holzbauteil gepresst werden.

Fig. B2.2 zeigt einen Querschnitt und einen Längsschnitt von einem durch die Verankerungsvorrichtung B 2.4 verbundenem Verbindungselement B 2.2. Die Verbindungsmittel B 2.3 sind in das Holzbauteil B 2.1 eingepresst und das Holzbauteil B 2.1 ist von den Aufstandsplatten der Verbindungsmittel B 2.3 bis zum oberen Ende des Verbindungselementes B 2.2, eingespannt.

Fig. B2.3 zeigt die Verankerungsteile B 2.4. Der Rand der Seite d ist ca. 30mm im rechten Winkel abgebogen und ausgestanzt. Die verbliebenen Teile der Randabkantung bilden eine Nagelreihe mit Nägeln im Abstand von ca. 30mm. Die Breite der Nägel beträgt ca. 5mm. Der Rand der Seite d ist ca. auf 7mm Breite um die Materialstärke des Verbindungselementes B 2.2 abgekantet. Ca. 3mm vom Seitenrand sind Löcher in den Falz eingestanzt. Die Größe und Anordnung der Löcher entspricht den Abmessungen und Anordnung der Nägel auf Seite e.

Fig. B2.4 zeigt die Verankerungsteile B 2.4 von dem Bereich der Verbindungselemente, welche die Holzbauteile B 2.1 nicht einspannt. In diesem Bereich werden die Verankerungsteile B 2.4 mit einer Pressvorrichtung umgebogen und gegen die Seite e gepresst.

Fig. B2.5 zeigt die Verankerungsteile B 2.4, wie sie miteinander und mit den Holzbauteilen B 2.1 verbunden sind.

### Ausführung B 3:

Fig. B3.1 zeigt den Querschnitt und den Längsschnitt eines zweiteiligen Verbindungselementes B 3.2 und die Verbindungsmittel B 3.3 sowie die Verbindungsklammern. Die beiden Teile des Verbindungselementes B 3.2 sind in derAusführung identisch. Sie bestehen aus U - förmig abgekanteten Blechen. Die Abmessungen sind so bestimmt, dass die Profile nach dem Aufpressen auf das Holzbauteil B 3.1 den gleichen Querschnitt bilden wie das Holzbauteil B 3.1 und dieses unter Berücksichtigung der zulässigen Faserpressung einspannen. Die Verbindungsmittel B 3.3 sind auf den Innenseiten a der beiden Teile des Verbindungselementes B 3.2 angeschweißt. Der Abstand von der Oberseite der Aufstandsplatte der Verbindungsmittel B 3.3 bis zum oberen Abschnitt der Teile des Verbindungselementes B 3.2 entspricht der Länge der Einspannung des Holzbauteils B 3.1 in das Verbindungselement B 3.2. Die Ränder der Seiten b und c sind in einem Abstand von ca. 60mm vom oberen Abschnitt und dann ca. alle 170mm, auf einer Fläche von ca. 10mm x 40mm um die Materialstärke eingedrückt. In diese Flächen sind Schlitze von ca. 30mm x 3mm eingestanzt. Nach dem Aufpressen der beiden Teile des Verbindungselementes B 3.2 werden Verbindungsklammern durch die Schlitze ins Holzbauteil B 3.1 gepresst und somit die beiden Teile des Verbindungselementes B 3.2 miteinander und mit dem Holzbauteil B 3.1 verbunden.

Fig. B3.2 zeigt den Querschnitt und den Längsschnitt des zweiteiligen Verbindungselementes B 3.2 mit dem eingespannten Holzbauteil B 3.1 und die eingepressten Verbindungsmittel B 3.3 sowie die eingepressten Verbindungsklammern.

Fig. B3.3 zeigt ebenfalls den Querschnitt des zweiteiligen Verbindungselementes B 3.2 sowie eine Seitenansicht des Verbindungselementes B 3.2 mit den Verbindungsklammern.

Fig. B3.4 zeigt die Verbindungsklammern in dem Bereich des Verbindungselementes, der das Holzbauteil B 2.1 nicht einspannt. In diesem Bereich werden die Verbindungsklammern mit einer Pressvorrichtung auseinander gebogen und gegen die Seiten c und d gepresst.

Beschreibung der Verfahren C und D, ohne zeichnerische Darstellung.

### Verfahren C:

Einbindung der Holzbauteile in Verbindungselemente aus plastischem Material und Einspannung der Holzbauteile durch Erhärten der Materialien.

Ebenso wie bei Verfahren A und B, wird das Holzbauteil C 1 in das Verbindungselement C 2 eingespannt und überträgt die Kräfte durch die Verbindungsmittel C 3 auf das Verbindungselement C 2. Durch die Einbindung des Verbindungselementes in Beton oder Erdreich oder durch den Anschluss an andere Bauteile werden die Kräfte aus dem Verbindungselement C 2 in Beton oder Erdreich oder in andere Bauteile weitergeleitet. Die Verbindungsmittel C 3 bestehen wie bei Verfahren A, aus einem Teil der als Nagelblech und einem Teil der als Verankerungsteil ausgebildet ist. Der Teil, der als Nagelblech ausgebildet ist, wird gemäß Verfahren A auf das Holzbauteil gepresst. Der Teil der als Verankerungsteil ausgebildet ist, steht über den Abschnitt des Holzbauteils hinaus. Das Holzbauteil mit den Verbindungsmitteln wird entsprechend der Einspannlänge in einer Form fixiert.

### Verfahren D:

Einbindung der Holzbauteile in Folien oder Bahnen.

Verfahren D eignet sich für die Herstellung eines Holzbauteils mit Schutzelement zur Einbindung in Erdreich. Anders als bei den Verfahren A, B und C dient das Element nicht als Verbindung von Holzbauteil und Beton oder Erdreich oder anderen Bauteilen also auch nicht zur Weiterleitung von Kräften. Das Holzbauteil muss direkt in das Erdreich eingebunden werden. Die Holzbauteile werden im Bereich der Einspannung und an beiden Seiten ca. 5cm - 10cm darüber hinaus, maschinell in Folien oder Bahnen eingebunden. Sie verhindern den Kontakt vom Erdreich mit dem Holzbauteil und dienen somit als Schutzelement.

## Patentansprüche

1. Verfahren zum Herstellen eines Holzbauteils mit Verbindungselement zur Einbindung in Beton oder Erdreich oder zum Anschluss an andere Bauteile,
wobei das Holzbauteil aus einem lang gestreckten Holzbauteil besteht, **dadurch gekennzeichnet, dass** das holz bauteil innerhalb einer serienmäßigen Ausführung in abgestuften Längen produziert wird und an einem Abschnitt oder an beiden Abschnitten maschinell mit einem ein- oder mehrteiligen Verbindungselement druck- zug- oder biegefest oder einer Kombination dieser Varianten verbunden wird
wobei zuerst Verbindungsmittel mit dem Holzbauteil verbunden werden, dann das Verbindungselement mit einer Pressvorrichtung in Längsrichtung auf das Holzbauteil gepresst wird,
wobei die Verbindungsmittel aus korrosionsgeschütztem Flachstahl bestehen, wobei ein Teil jedes Verbindungsmittels zur Befestigung mit dem Holzbauteil dient und der andere Teil jedes Verbindungsmittels zur Befestigung durch Kontakt, Einklemmen, Spreizen oder Umbiegen mit dem Verbindungselement dient,
wobei das Verbindungselement aus einem Hohlprofil besteht, welches die gleiche Querschnittsform wie das Holzbauteil im Bereich der Einspannung aufweist,
wobei nach dem Aufpressen des Verbindungselements auf das Holzbauteil, der Teil der Verbindungsmittel der zur Befestigung mit dem Holzbauteil dient, nicht sichtbar im Inneren des Verbindungselements liegt.

2. Verfahren zum Herstellen eines Holzbauteils mit Verbindungselement zur Einbindung in Beton oder Erdreich oder zum Anschluss an andere Bauteile, **dadurch gekennzeichnet, dass** das Holzbauteil aus einem lang gestreckten Holzbauteil besteht, was innerhalb einer serienmäßigen Ausführung in abgestuften Längen produziert wird und an einem Abschnitt oder an beiden Abschnitten maschinell mit einem ein- oder mehrteiligen Verbindungselement druck- zug- oder biegefest oder einer Kombination dieser Varianten verbunden wird,
wobei zuerst die Verbindungsmittel mit dem Verbindungselement verbunden werden und das Verbindungselement und die Verbindungsmittel mit einer quer zur Längsachse wirkenden Pressvorrichtung mit dem Holzbauteil verbunden werden und dann die Seitenflächen mit einer Pressvorrichtung durch Falze, Kantungen oder Befestigungsmittel miteinander oder miteinander und mit dem Holzbauteil verbunden werden,
wobei die Verbindungsmittel aus Flachstahl bestehen, ein Teil des Verbindungsmittels als Nagelblech zur Verbindung mit dem Holzbauteil ausgebildet ist und an einem Ende eine Aufstandsplatte bildet,
wobei die Verbindungsmittel am Verbindungselement angeschweißt werden, bevor die Verbindungselemente mit den Verbindungsmitteln korrosionsgeschützt werden,
wobei das Verbindungselement aus ein- oder mehrteiligen Blechen mit angeschweißten Verbindungsmitteln bestehen, die so vorgekantet sind, dass sie beim Aufpressen auf des Holzbauteil durch Zusammenpressen der Seitenflächen die gleiche Querschnittsform erhalten die das Holzbauteil im Bereich der Einspannung aufweist, und das Holzbauteil unter Berücksichtigung der zulässigen Faserpressung einspannen wenn die Seitenflächen verbunden sind,
wobei nach dem Aufpressen des Verbindungselements auf das Holzbauteil die Verbindungsmittel nicht sichtbar im Inneren des Verbindungselements liegen.

3. Verfahren zum Herstellen eines Holzbauteils mit Verbindungselement zur Einbindung in Beton oder Erdreich oder zum Anschluss an andere Bauteile,
wobei das Holzbauteil aus einem lang gestreckten Holzbauteil besteht, **dadurch gekennzeichnet, dass** das holzbauteil innerhalb einer serienmäßigen Ausführung in abgestuften Längen produziert wird und an einem Abschnitt oder an beiden Abschnitten maschinell mit einem ein- oder mehrteiligen Verbindungselement druck- zug- oder biegefest oder einer Kombination dieser Varianten verbunden wird,
wobei zuerst Verbindungsmittel durch eine Pressvorrichtung auf das Holzbauteil gepresst werden, das Holzbauteil mit den Verbindungsmitteln entsprechend der Einspannlänge in einer Form fixiert wird und dann das Verbindungselement, welches aus plastischem Material besteht,
in der Form, durch Erhärtung mit dem Holzbauteil und den Verbindungsmitteln verbunden wird, wobei das Holzbauteil in das Verbindungselement eingespannt wird, so dass das Holzbauteil Kräfte durch die Verbindungsmittel auf das Verbindungselement übertragen kann, wobei jedes Verbindungsmittel aus einem Teil, der als Nagelblech, und einem Teil der als Verankerungsteil ausgebildet ist, besteht,
wobei der Teil der als Nagelblech ausgebildet ist, auf das Holzbauteil gepresst wird, und wobei der Teil der als Verankerungsteil ausgebildet ist, über den Abschnitt des Holzbauteils hinaus steht.

## Claims

1. Method for producing a wooden component with connection element for integration in concrete or ground soil or for connection to other components,
**characterized in that**
the wooden component consists of an elongated wooden component, which is produced within a serial design in gradual lengths and is automatically connected to one section or both sections with a single- or multi-part connection element in a pressure-resistant, high-tensile or bend-resistant manner or a combination of these variants,
wherein the connection means are first connected with the wooden component, then the connection element is pressed onto the wooden component in the longitudinal direction with a pressing device,
wherein the connection means consist of corrosion-protected flat steel,
wherein a part of each connection means serves for fastening with the wooden component and the other part of each connection means serves for fastening through contact, clamping, strutting or bending over with the connection element,
wherein the connection element consists of a hollow profile, which has the same cross-sectional shape as the wooden component in the area of the clamping,
wherein anchor parts are fastened inside the connection element, which are connected with the connection means during pressing of the connection element onto the wooden component, wherein, after the pressing of the connection element onto the wooden component, the part of the connection means that serves for fastening with the wooden component does not lie visibly inside the connection element.

2. Method for producing a wooden component with connection element for integration in concrete or ground soil or for connection to other components,
**characterized in that**
the wooden component consists of an elongated wooden component, which is produced within a serial design in gradual lengths and is automatically connected to one section or both sections with a single- or multi-part connection element in a pressure-resistant, high-tensile or bend-resistant manner or a combination of these variants,
wherein the connection means are first connected with the connection element and the connection element and the connection means are connected with the wooden component with a pressing device acting transversally to the longitudinal axis and then the lateral surfaces of the are connected with each other or with each other and with the wooden component with a pressing device through folds, bends or fastening means,
wherein the connection element consists of single- or multi-part sheets with welded on connection means, which are prefolded such that during pressing onto the wooden component through the pressing together of the lateral surfaces the same cross-sectional shape is obtained as the wooden component in the area of the clamping, and the wooden component clamps in due consideration of the permissible fiber pressing when the lateral surfaces are connected, wherein, after the pressing of the connection element onto the wooden component, the connection means do not lie visibly inside the connection element.

3. Method for producing a wooden component with connection element for integration in concrete or ground soil or for connection to other components,
**characterized in that**
the wooden component consists of an elongated wooden component, which is produced within a serial design in gradual lengths and is automatically connected to one section or both sections with a single- or multi-part connection element in a pressure-resistant, high-tensile or bend-resistant manner or a combination of these variants,
wherein the connection means are first pressed onto the wooden component by a pressing device, the wooden component is fixed in a mold with the connection means according to the clamping length and the connection element, which consists of a plastic material, is then connected in the mold through hardening with the wooden component and the connection means, wherein the wooden component is clamped into the connection element so that the wooden component can transfer forces through the connection means to the connection element,
wherein each connection means consists of a part designed as a fixing plate and a part designed as an anchor part, wherein the part designed as fixing plate is pressed onto the wooden component and wherein the part designed as the anchor part protrudes beyond the section of the wooden component.

## Revendications

1. Procédé de fabrication d'un composant en bois avec élément de raccordement pour l'intégration dans du béton ou dans le sol ou pour la liaison avec d'autres composants,
**caractérisé en ce que**
le composant en bois se compose d'un composant en bois étiré en longueur qui est produit en longueurs étagées dans le cadre d'une exécution en série et est, sur un tronçon ou sur deux tronçons, raccordé par machine à un élément de raccordement en une ou plusieurs parties d'une façon résistant à la pression, à la traction ou la flexion ou dans une combinaison de ces variantes,
les moyens de raccordement étant d'abord raccordés au composant en bois, puis l'élément de raccordement étant pressé sur le composant en bois, avec un dispositif de pression, dans la direction longitudinale,
les moyens de raccordement étant composés d'acier plat protégé contre la corrosion, une partie de chaque moyen de raccordement servant à la fixation avec le composant en bois, et l'autre partie de chaque moyen de raccordement servant à la fixation avec l'élément de raccordement par contact, coincement, écartement ou recourbement,
l'élément de raccordement se composant d'un profilé creux qui présente la même forme de section transversale que le composant en bois dans la zone de serrage,
des parties d'ancrage étant fixées à l'intérieur de l'élément de raccordement et étant raccordées aux moyens de raccordement lors du pressage de l'élément de raccordement sur le composant en bois,
la partie des moyens de raccordement qui sert à la fixation avec le composant en bois étant, après le pressage de l'élément de raccordement sur le composant en bois, située de façon invisible à l'intérieur de l'élément de raccordement.

2. Procédé de fabrication d'un composant en bois avec élément de raccordement pour l'intégration dans du béton ou dans le sol ou pour la liaison avec d'autres composants,
**caractérisé en ce que**
le composant en bois se compose d'un composant en bois étiré en longueur qui est produit dans le cadre d'une exécution en série en longueurs étagées et est, sur un tronçon ou sur deux tronçons, raccordé par machine à un élément de raccordement en une ou plusieurs parties d'une façon résistant à la pression, à la traction ou la flexion ou dans une combinaison de ces variantes,
les moyens de raccordement étant d'abord raccordés à l'élément de raccordement, et l'élément de raccordement et les moyens de raccordement étant raccordés au composant en bois avec un dispositif de pression agissant transversalement à l'axe longitudinal, et puis les faces latérales étant raccordées entre elles avec un dispositif de pression par des rainures, des pliures à vive arête ou des moyens de fixation, ou bien entre elles et avec le composant en bois,
l'élément de raccordement se composant de tôles en une ou plusieurs parties avec des moyens de raccordement soudés qui sont pré-pliés de sorte que, lors du pressage sur le composant en bois par compression des faces latérales, ils reçoivent la même forme de section transversale que présente le composant en bois dans la zone du serrage et serrent le composant en bois avec prise en compte de la compression des fibres admissible quand les faces latérales sont raccordées,
les moyens de pression étant, après le pressage de l'élément de raccordement sur le composant en bois, situés de façon invisible à l'intérieur de l'élément de raccordement.

3. Procédé de fabrication d'un composant en bois avec élément de raccordement pour l'intégration dans du béton ou dans le sol ou pour la liaison avec d'autres composants,
**caractérisé en ce que**
le composant en bois se compose d'un composant en bois étiré en longueur qui est produit dans le cadre d'une exécution en série en longueurs étagées et est, sur un tronçon
ou sur deux tronçons, raccordé par machine à un élément de raccordement en une ou plusieurs parties d'une façon résistant à la pression, à la traction ou la flexion ou dans une combinaison de ces variantes,
les moyens de raccordement étant d'abord pressés sur le composant en bois par un dispositif de pression, le composant en bois étant fixé dans une forme avec les moyens de raccordement en fonction de la longueur de serrage et puis l'élément de raccordement qui est composé de matériau plastique, étant, dans la forme, raccordé par durcissement au composant en bois et aux moyens de raccordement, le composant en bois étant serré dans l'élément de raccordement de sorte que le composant en bois peut transmettre, par les moyens de raccordement, des forces à l'élément de raccordement, chaque moyen de raccordement se composant d'une partie qui est constituée en tant que tôle à clous et d'une partie qui est constituée en tant que partie d'ancrage, la partie qui est constituée en tant que tôle à clous étant pressée sur le composant en bois, la partie qui est constituée en tant que partie d'ancrage dépassant du tronçon du composant en bois.
